(19) **Europäisches Patentamt / European Patent Office / Office européen des brevets**

(11) **EP 4 672 748 A1**

(12) **EUROPEAN PATENT APPLICATION**
published in accordance with Art. 153(4) EPC

(43) Date of publication:
**31.12.2025 Bulletin 2026/01**

(21) Application number: **24760624.7**

(22) Date of filing: **23.02.2024**

(51) International Patent Classification (IPC):
*H04N 19/124* (2014.01)   *H04N 19/184* (2014.01)
*H04N 19/91* (2014.01)   *H04N 19/18* (2014.01)
*H04N 19/60* (2014.01)

(52) Cooperative Patent Classification (CPC):
**H04N 19/124; H04N 19/18; H04N 19/184;
H04N 19/60; H04N 19/91**

(86) International application number:
**PCT/KR2024/002408**

(87) International publication number:
**WO 2024/177436 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.02.2023 KR 20230024081**

(71) Applicant: **LG Electronics Inc.**
**Yeongdeungpo-gu**
**Seoul 07336 (KR)**

(72) Inventors:
• **KIM, Chulkeun**
  **Seoul 06772 (KR)**
• **LIM, Jaehyun**
  **Seoul 06772 (KR)**
• **GWAK, Donggyu**
  **Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD AND DEVICE FOR OPTIMIZING QUANTIZATION ACCORDING TO IMAGE USE, AND METHOD FOR TRANSMITTING BITSTREAM**

(57)   The present disclosure relates to an image encoding/decoding method and device for optimizing quantization according to image use, a method for transmitting a bitstream, and a bitstream storage medium. The image data encoding method according to one embodiment of the disclosure comprises the steps of: acquiring, from a bitstream, image use information for image data; and performing inverse quantization on the basis of the image use information to reconstruct the image data, wherein the image use information can indicate human perception and/or machine perception of the image data.

**FIG. 15**

**Description**

[Technical Field]

The present disclosure relates to an image encoding/decoding method and apparatus, and more particularly, to an image encoding/decoding method and apparatus that perform quantization optimization according to an image purpose, and a method of transmitting a bitstream generated by the image encoding method/apparatus of the present disclosure.

[Background Art]

Along with the development of machine learning technology, the demand for image processing-based artificial intelligence services is increasing. In order to effectively process a large amount of image data required for artificial intelligence services within limited resources, an image compression technology optimized for performing machine tasks is essential. However, since the existing image compression technologies have been developed with the goal of high-resolution and high-quality image processing for human vision, there is a problem that they are not suitable for artificial intelligence services. Accordingly, research and development on new machine-oriented image compression technologies suitable for artificial intelligence services are actively being conducted.

[Disclosure]

[Technical Problem]

The present disclosure is to provide an image encoding/decoding methods and apparatuses with improved encoding/decoding efficiency.

The present disclosure is to provide an image encoding/decoding method and apparatus that performs quantization optimization based on an image purpose.

The present disclosure is to provide a method and an apparatus that encodes/decodes an image by selecting a quantization method suitable for a machine task.

The present disclosure is to provide a method and an apparatus that encodes/decodes an image based on a Video Coding for Machine (VCM) bitstream, based on an image purpose.

The present disclosure is to provide a method for defining an attribute of necessary information according to a type of machine task.

The present disclosure is to provide a quantization optimization method for improving machine perception performance.

The present disclosure is to provide a method of transmitting a bitstream generated by an image encoding method or apparatus according to the present disclosure.

The present disclosure is to provide a recording medium storing a bitstream generated by an image encoding method or apparatus according to the present disclosure.

The present disclosure is to provide a recording medium storing a bitstream received and decoded by an image decoding apparatus according to the present disclosure and used for reconstructing an image.

The technical problems to be achieved in the present disclosure are not limited to the technical problems described above, and other technical problems not described may be clearly understood by those of ordinary skill in the art from the following descriptions.

[Technical Solution]

An image data decoding method performed by an image data decoding apparatus according to an aspect of the present disclosure may include obtaining image purpose information for the image data from a bitstream and reconstructing the image data by performing dequantization based on the image purpose information, wherein the image purpose information may indicate at least one of whether the image data is for human perception or for machine perception.

An image data encoding method performed by an image data encoding apparatus according to an aspect of the present disclosure may include performing quantization for the image data by determining an image purpose for the image data, and encoding image purpose information indicating the image purpose, wherein the image purpose information may indicate at least one of whether the image data is for human perception or for machine perception.

A recording medium according to another aspect of the present disclosure may store a bitstream generated by the image encoding method or the image encoding apparatus of the present disclosure.

A bitstream transmission method according to another aspect of the present disclosure may transmit a bitstream generated by the image encoding method or the image encoding apparatus of the present disclosure to a decoding apparatus.

The features briefly summarized above for the present disclosure are merely an exemplary aspect of a detailed description of the present disclosure described below, and do not limit the scope of the present disclosure.

[Advantageous Effects]

According to the present disclosure, an image encoding/decoding method and apparatus with improved encoding/decoding efficiency can be provided.

According to the present disclosure, an image encoding/decoding method and apparatus that performs quantization optimized based on the image purpose may be provided.

According to the present disclosure, a method and apparatus for defining the attributes of necessary information according to the image purpose may be provided.

According to the present disclosure, a method and apparatus for encoding/decoding an image in which image coding performance is improved for machine perception may be provided.

According to the present disclosure, a video coding for machine (VCM) bitstream may be generated according to the image purpose.

According to the present disclosure, a method and apparatus for encoding/decoding an image by selecting a quantization method suitable for a machine task may be provided.

According to the present disclosure, a method for transmitting a bitstream generated by the image encoding method or apparatus according to the present disclosure may be provided.

According to the present disclosure, a recording medium storing a bitstream generated by the image encoding method or apparatus according to the present disclosure may be provided.

According to the present disclosure, a recording medium storing a bitstream that is received and decoded by the image decoding apparatus according to the present disclosure and used for reconstructing an image may be provided.

The effects obtainable from the present disclosure are not limited to the effects described above, and other effects not described may be clearly understood by those of ordinary skill in the art from the following descriptions.

[Description of Drawings]

FIG. 1 is a diagram schematically showing a VCM system to which embodiments of the present disclosure may be applied.

FIG. 2 is a diagram schematically showing a VCM pipeline structure to which embodiments of the present disclosure may be applied.

FIG. 3 is a diagram schematically showing an image/video encoder to which embodiments of the present disclosure may be applied.

FIG. 4 is a diagram schematically showing an image/video decoder to which embodiments of the present disclosure may be applied.

FIG. 5 is a flowchart schematically showing a feature/feature map encoding procedure to which embodiments of the present disclosure may be applied.

FIG. 6 is a flowchart schematically showing a feature/feature map decoding procedure to which embodiments of the present disclosure may be applied.

FIG. 7 is a diagram illustrating an example of a feature extraction and reconstruction method to which embodiments of the present disclosure may be applied.

FIG. 8 is a diagram illustrating an example of an image partitioning method to which embodiments of the present disclosure may be applied.

FIG. 9 and FIG. 10 are diagrams illustrating examples of an image encoding/decoding system including a VCM image encoder and decoder.

FIG. 11 is a diagram illustrating an example of a VCM hierarchical structure.

FIG. 12 is a diagram illustrating an example of a VCM bitstream composed of an encoded abstract feature and NNAL information.

FIG. 13 is a diagram illustrating an example of a quantization group to which embodiments of the present disclosure may be applied.

FIG. 14 is a diagram illustrating an example of images with different attributes according to an embodiment of the present disclosure.

FIG. 15 is a diagram illustrating an example of frequency sensitivity determination criteria according to an embodiment of the present disclosure.

FIG. 16 is a diagram illustrating an example of an operation of an image encoder or decoder based on the frequency sensitivity determination criteria according to an embodiment of the present disclosure.

FIG. 17 is a diagram illustrating an example of an operation of an image encoder or decoder based on the frequency sensitivity determination criteria according to another embodiment of the present disclosure.

FIG. 18 is a diagram illustrating an example of an operation of an image encoder or decoder based on the frequency sensitivity determination criteria according to another embodiment of the present disclosure.

FIG. 19 is a diagram illustrating an example defining frequency sensitivity levels according to an embodiment of the present disclosure.

FIG. 20 is a diagram illustrating an image data decoding method according to an embodiment of the present disclosure.

FIG. 21 is a diagram illustrating an image data encoding method according to an embodiment of the present disclosure.

FIG. 22 is a diagram showing an example of a content streaming system to which embodiments of the present disclosure may be applied.

FIG. 23 is a diagram showing another example of a content streaming system to which embodiments of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one unit. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

## Overview of VCM System

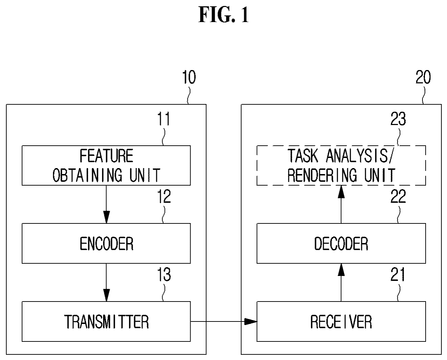

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set, and a feature or a feature map may be referred to as 'feature information'.

An encoding apparatus 10 may include a feature obtaining unit 11, an encoder 12 and a transmitter 13.

A feature obtaining unit 11 may obtain a feature/a feature map for a source image/video. According to an embodiment, a feature obtaining unit 11 may obtain a feature/a feature map from an external device, e.g., a feature extraction network. In this case, a feature obtaining unit 11 performs a feature reception interface function. Alternatively, a feature obtaining unit 11 may obtain a feature/a feature map by executing a neural network (e.g., CNN, DNN, etc.) by using a source image/video as an input. In this case, a feature obtaining unit 11 performs a feature extraction network function.

According to an embodiment, an encoding apparatus 10 may further include a source image generator (not shown) for obtaining a source image/video, or may include it instead of a feature obtaining unit 11. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 12 may encode a feature/a feature map obtained by a feature obtaining unit 11. An encoder 12 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may obtain a feature/a feature map information or data output in the form of a bitstream, and may transmit the obtained information or data to a decoding apparatus 20 or another external object through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network. The transmitter 13 may be provided as a transmission device separate from the encoder 12, and in this case, the transmission device may include at least one processor for obtaining a feature/a feature map information or data output in the form of a bitstream, and a transmitter for transmitting it in the form of a file or streaming.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

## VCM Pipeline

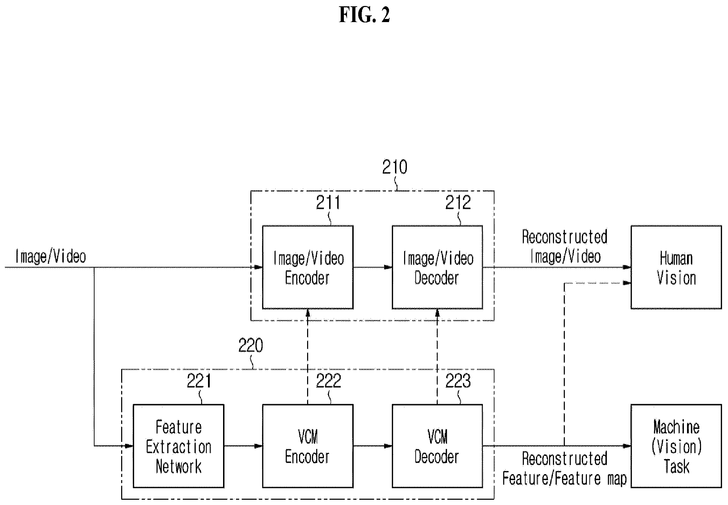

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

## Encoder

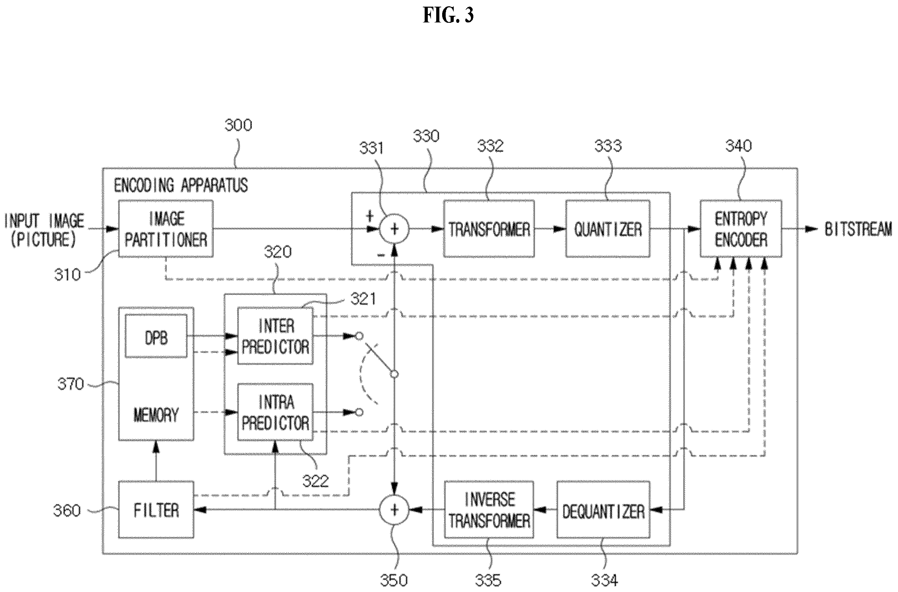

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU, unit). A coding unit may be recursively partitioned from a coding tree unit (CTU) or a largest coding unit (LCU, Lunit) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a unit. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated unit (colUnit), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

## Decoder

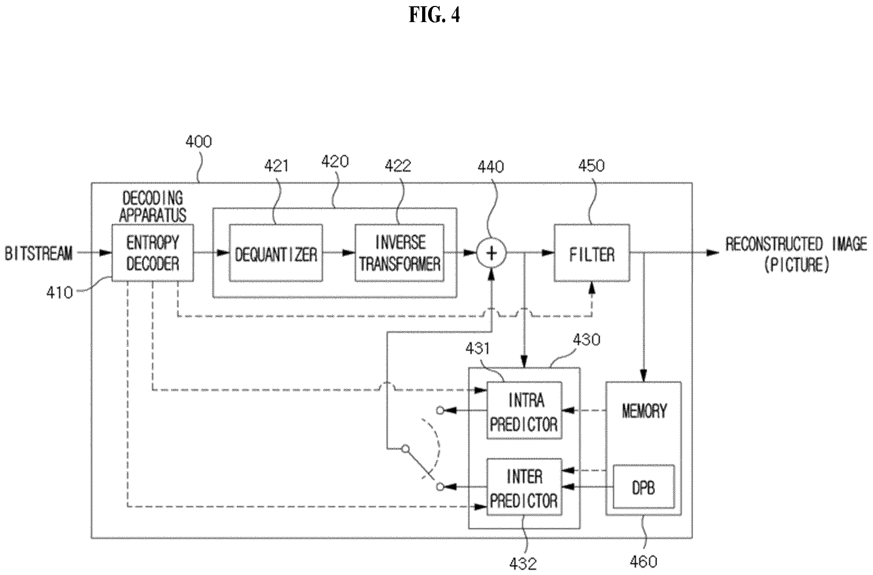

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memory 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder). In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

## Feature/Feature Map Encoding Procedure

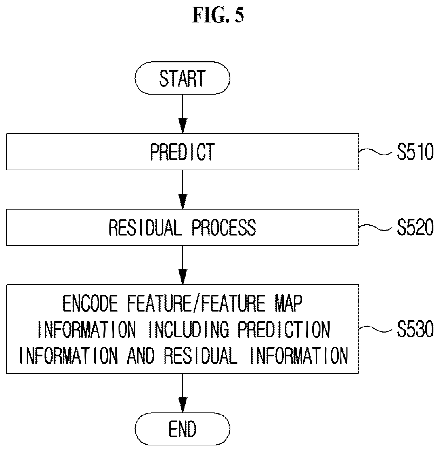

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/-feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

**Feature/Feature May Decoding Procedure**

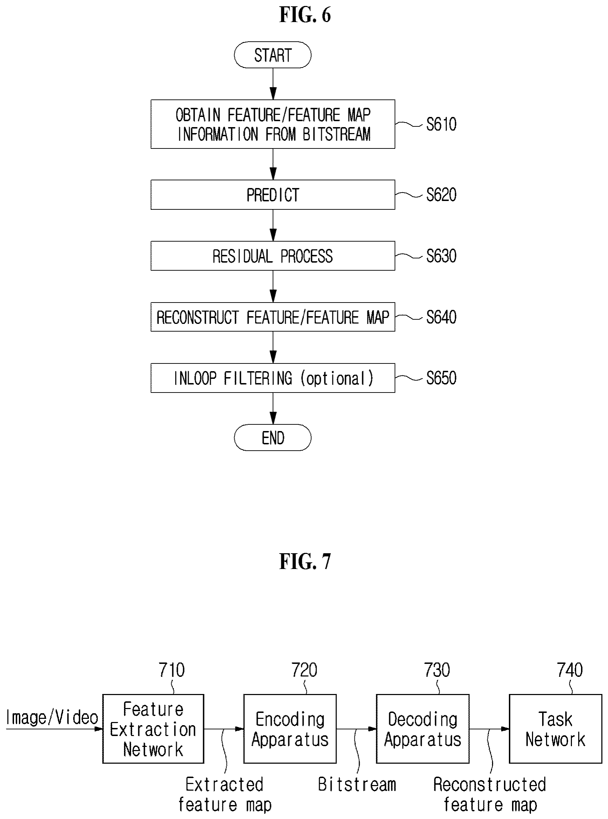

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

**Feature Extraction Method and Data Distribution Characteristics**

Embodiments of the present disclosure propose a method for generating a prediction process and a related bitstream required to compress an activation (feature) map generated in a hidden layer of a deep neural network.

Input data input to a deep neural network passes through computational process of multiple hidden layers, and the computational results from each hidden layer are output as a feature/feature map with various sizes and numbers of channels depending on the type of the deep neural network in use and the position of the hidden layer within the corresponding deep neural network.

FIG. 7 is a diagram illustrating an example of a feature extraction and reconstruction method to which embodiments of the present disclosure may be applied.

Referring to FIG. 7, a feature extraction network 710 may extract an intermediate layer activation (feature) map of a deep neural network from a source image/video and output the extracted feature map. The feature extraction network 710 may be a set of consecutive hidden layers from the input of the deep neural network.

An encoding apparatus 720 may compress the output feature map and output it in the form of a bitstream, and a decoding apparatus 730 may reconstruct the (compressed) feature map from the output bitstream. The encoding apparatus 720 may correspond to the encoder 12 of FIG. 1, and the decoding apparatus 730 may correspond to the decoder 22 of FIG. 1. A task network 740 may perform a task based on the reconstructed feature map.

The number of channels of the feature map to be compressed in VCM may vary depending on the network used for feature extraction and the extraction position, and may be greater than the number of channels of the input data.

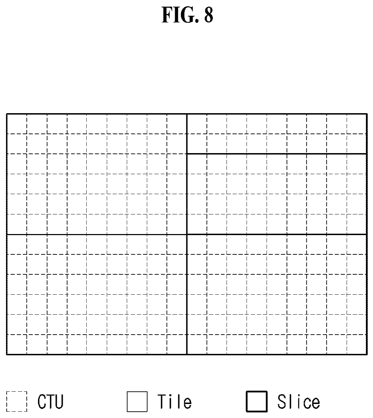

FIG. 8 is a diagram illustrating an example of an image partitioning method to which embodiments of the present disclosure may be applied. As an example, it illustrates CTUs, slices, and tiles within an image.

The video/image coding method according to this document may be performed based on the following partitioning structure. Procedures such as prediction, residual processing (transform/inverse transform, quantization/-dequantization, etc.), syntax element coding, filtering, etc. may be performed based on a CTU, a CU (and/or a TU, a PU) derived from the partitioning structure of FIG. 8. The block partitioning procedure may be performed by the encoding apparatus, and partitioning related information may be encoded and transmitted to the decoding apparatus in the form of a bitstream. The decoding apparatus may derive the block partitioning structure of the current picture based on the partitioning related information obtained from the bitstream, and may perform a series of procedures for image decoding (e.g., prediction, residual processing, block/picture reconstruction, in-loop filtering, etc.) based on the block partitioning structure. The CU size may be equal to the TU size, and multiple TUs may exist within a CU region. Meanwhile, the CU size may generally refer to the luma component (sample) CB size. The TU size may generally refer to the luma component (sample) TB size. The chroma component (sample) CB or TB size may be derived based on the luma component (sample) CB or TB size according to the component ratio according to a color format (chroma format, e.g., 4:4:4, 4:2:2, 4:2:0, etc.) of the picture/image, and transform/inverse transform may be performed in TU (TB) units.

In addition, in the video/image coding according to this document, the image processing unit may have a hierarchical structure. A picture may be divided into one or more CUs, and one or more CUs may be grouped and distinguished as one or more tiles, bricks, slices, and/or tile groups. One slice may include one or more bricks. One brick may include one or more CTU rows within a tile. A slice may include an integer number of bricks of a picture. One tile group may include one or more tiles. One tile may include one or more CTUs. The CTUs may be divided into one or more CUs. A tile group may include an integer number of tiles according to the tile raster scan within a picture. A slice header may carry information/a parameter applicable to the corresponding slice (i.e., the blocks within the slice). A picture header may carry information/a parameter applicable to the corresponding picture (or blocks within the picture). When the encoding/decoding apparatus includes a multi-core processor, the encoding/decoding procedures for the tile, slice, brick, and/or tile group may be performed in parallel. In this document, the slice and tile group may be used interchangeably. In other words, a tile group header may be referred to as a slice header. Here, the slice may have one of the slice types including I slice, P slice, and B slice.

In the encoding apparatus, depending on the characteristics of the video image (e.g., resolution) or considering coding efficiency or parallel processing, the tile/tile group, brick, slice, and the maximum and minimum coding unit size may be determined, and information about them or information from which they can be derived may be included in the bitstream.

In the decoding apparatus, information indicating whether the tile/tile group, brick, slice, or CTU within a tile of the current picture is divided into multiple coding units may be obtained. Such information may be obtained (or transmitted) only under certain conditions to improve efficiency.

The slice header (slice header syntax) may include information/a parameter commonly applicable to the slice. The APS (APS syntax) or PPS (PPS syntax) may include information/a parameter commonly applicable to one or more pictures. The SPS (SPS syntax) may include information/a parameter commonly applicable to one or more sequences. The VPS (VPS syntax) may include information/a parameter commonly applicable to multiple layers. The DPS (DPS syntax) may include information/a parameter commonly applicable to the entire video. The DPS may include information/a parameter related to the concatenation of a coded video sequence (CVS).

In this document, the term high level syntax may include at least one of the APS syntax, PPS syntax, SPS syntax, VPS syntax, DPS syntax, picture header syntax, or slice header syntax.

In addition, for example, information regarding the partitioning and configuration of the tile/tile group/brick/slice may be configured at the encoding side through the high level syntax and may be transmitted to the decoding apparatus in the form of a bitstream.

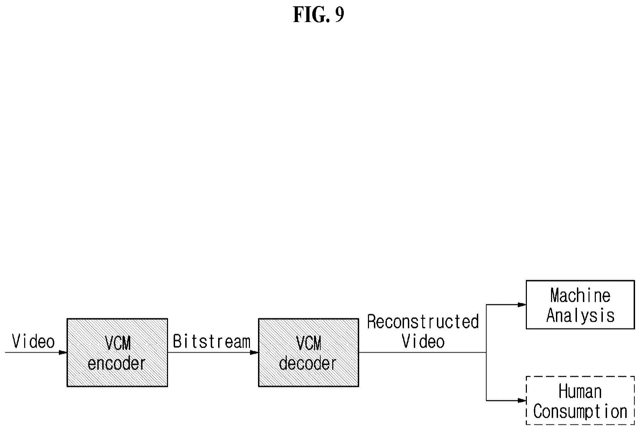

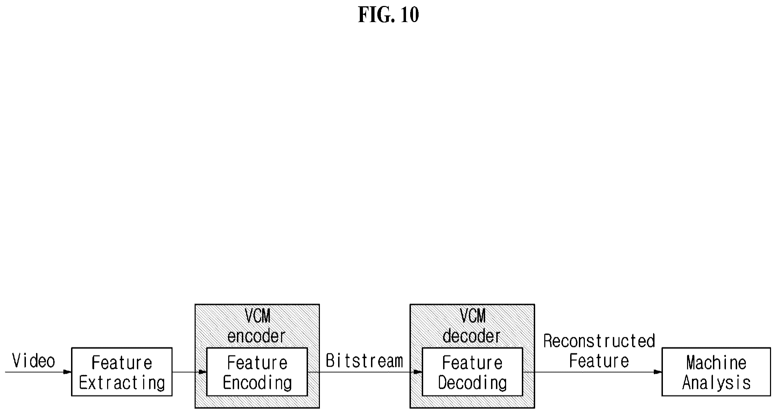

FIG. 9 is a diagram illustrating an example of a VCM image encoding/decoding system, and FIG. 10 is a diagram illustrating another example of a VCM image encoding/decoding system. As an example, FIG. 9 and FIG. 10 may be extended/redesigned to allow a video coding system (e.g., FIG. 1) to use only a part of a video source or to obtain and use necessary parts/information from the video source depending on the request and purpose of the user or machine and the neighboring environment. In other words, FIGS. 9 and 10 may relate to video coding for machines (VCM).

Video coding for machines (VCM) may refer to encoding/decoding of an entire image and/or a part of an image and/or necessary information (feature) from the image, depending on the request, purpose, and neighboring environment of a user and/or a machine. The target of encoding in VCM may be the image itself, information referred to as a feature extracted from the image according to the request, purpose, and neighboring environment of a user and/or a machine, or a set of sequential information over time.

Referring to FIG. 9, the VCM system may include an image encoder and an image decoder for VCM. A source device (FIG. 1) may transmit encoded image information to a receiving device via a storage medium or a network. The entity using the device may be a human and/or a machine.

Referring to FIG. 10, the VCM system may include an image encoder and an image decoder for VCM. The source device may transmit encoded image information (feature) to a receiving device via a storage medium or a network. The entity using the device may be a human and/or a machine.

As an example, the process of extracting information, i.e., a feature, from an image may be referred to as feature extraction. Feature extraction may be performed in both a video/image capture device and a video/image generation device. A feature may be information extracted/processed from an image according to the request, purpose, and neighboring environment of a user and/or a machine, and may represent a set of sequential information over time.

An image encoder for VCM may perform a series of processes such as prediction, transform, quantization, etc. for efficient compression and coding of the entire image and/or a part of the image and/or a feature. The encoded data may be output in the form of a bitstream.

An image decoder for VCM may decode a video/image by performing a series of processes such as dequantization, inverse transform, prediction, etc., which correspond to the operations of an encoding apparatus, in other words, the encoder.

The decoded image and/or feature may be rendered. In addition, they may be used to perform a task of a user or a machine. Examples of such tasks may include AI and computer vision tasks such as face recognition, behavior recognition, lane recognition, etc.

The present disclosure provides various embodiments related to the acquisition and coding of an entire image and/or a part of an image for VCM, and unless otherwise stated, the embodiments may be combined with one another and performed. The method/embodiment of the present disclosure may be applied to a method disclosed in the video coding for machines (VCM) standard.

**VCM Layer Structure**

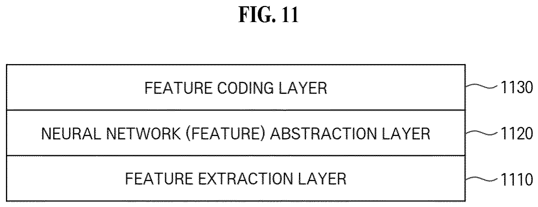

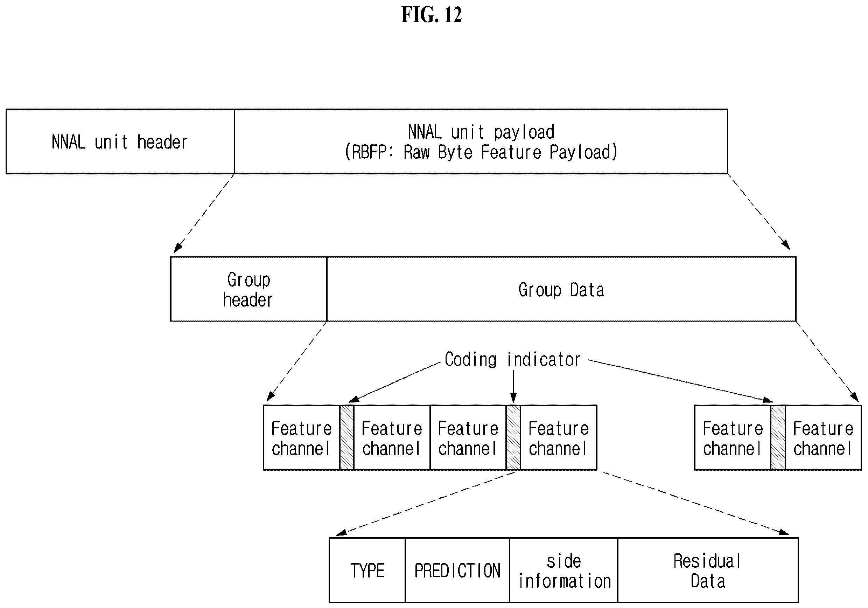

VCM may be based on a layer structure composed of a feature coding layer, a neural network (feature) abstraction layer, and a feature extraction layer. FIG. 11 is a diagram illustrating an example of a VCM layer structure, and FIG. 12 is a diagram illustrating an example of a VCM bitstream composed of an encoded abstraction feature and NNAL information.

As an example, referring to FIG. 11, the VCM layer structure may include a feature extraction layer 1110, a neural network (feature) abstraction layer 1120, and a feature coding layer 1130.

The feature extraction layer 1110 may refer to a layer for extracting a feature from an input source and may also include the result of the extraction. The feature coding layer 1130 may refer to a layer for compressing the extracted feature and may also include the result of the compression.

The neural network abstraction layer 1120 may abstract information generated from the feature extraction layer 1110 (e.g., information on extracted feature/feature map) and transmit it to the feature coding layer 1130. The neural network abstraction layer 1120 may conceal the internal structure of the feature extraction layer 1110 and provide a consistent feature interface function through the abstraction of the information. Accordingly, even when the compression target changes due to tool (e.g., CNN, DNN, etc.) changes, the feature coding layer 1130 may perform a consistent feature coding procedure. In the present disclosure, the neural network abstraction layer (NNAL) may also be referred to as a feature abstraction layer.

An interface between the feature extraction layer 1110 and the neural network abstraction layer 1120, and an interface between the feature coding layer 1130 and the neural network abstraction layer 1120 may be predefined, and operations in the neural network abstraction layer 1120 may be configured to be modifiable later.

Referring to FIG. 12, The bitstream configured as shown may be referred to as a neural network abstraction layer (NNAL) unit. The NNAL unit may be an independent feature reconstruction unit. Input features for a single NNAL unit may be extracted from the same layer within a neural network. Accordingly, input features for a single NNAL unit may be forced to have the same characteristics. For example, the same feature extraction method may be applied to the input features for a single NNAL unit.

An NNAL unit may include an NNAL unit header and an NNAL unit payload. The NNAL unit header may include all information necessary to utilize an encoded feature for a task. The NNAL unit payload may include abstracted feature information. The NNAL unit payload may include a group header and group data. The group header may include configuration information of feature group data, such as a temporal order, number, or common property of feature channels constituting the feature group. A feature channel may refer to a unit of an encoded feature. The group data may include a plurality of feature channels and coding indicators, and each feature channel may include type information, prediction information, side information, and residual information. In this case, the type information may indicate an encoding method, and the prediction information may indicate a prediction method. Additionally, the side information may indicate additional information required for decoding (e.g., entropy coding, quantization related information, etc.), and the residual information may include information on encoded feature elements (i.e., a set of feature value information).

**Overview of Quantization/Dequantization**

As described above, the quantizer of an image/video encoder may apply quantization to transform coefficients to derive quantized transform coefficients, and the dequantizer of the image/video encoder or the dequantizer of the image/video decoder may apply dequantization to the quantized transform coefficients to derive transform coefficients. Likewise, a VCM encoder may apply quantization to transform coefficients to derive quantized transform coefficients, and the dequantizer of the VCM encoder or the dequantizer of the VCM decoder may apply dequantization to the quantized transform coefficients to derive transform coefficients. In general, in feature/feature map coding, the quantization rate may be varied, and compression efficiency may be controlled using the varied quantization rate. From an implementation perspective, considering the complexity, a quantization parameter (QP) may be used instead of using the quantization rate directly. For example, a quantization parameter with an integer value from 0 to 63 may be used, and each quantization parameter value may correspond to an actual quantization rate. The quantization parameter for the luma component (luma sample) ($QP_Y$) and the quantization parameter for the chroma component (chroma sample) ($QP_C$) may be set differently.

In the quantization process, the transform coefficient (C) is taken as input and divided by the quantization rate (Qstep), thereby obtaining a quantized transform coefficient (C'). In this case, considering the computational complexity, a scale may be multiplied to the quantization rate to convert it into an integer form, and the shift operation may be performed by a value corresponding to the scale value. A quantization scale may be derived based on the product of the quantization rate and the scale value. In other words, the quantization scale may be derived according to the QP. The quantized transform coefficient (C') may be obtained by applying the quantization scale to the transform coefficient (C).

The dequantization process is the inverse of the quantization process, in which the quantized transform coefficient (C') is multiplied by the quantization rate (Qstep) to obtain a reconstructed transform coefficient (C"). In this case, a level scale may be derived according to the quantization parameter, and the reconstructed transform coefficient (C") may be derived by applying the level scale to the quantized transform coefficient (C'). The reconstructed transform coefficient (C") may differ from the original transform coefficient (C) due to a loss during the transform and/or quantization process. Therefore, the encoder also performs dequantization in the same manner as the decoder.

Meanwhile, an adaptive frequency weighting quantization technique for adjusting the quantization strength according to frequency may be applied. Adaptive frequency weighting quantization technique is a method that applies different quantization strengths per frequency. Adaptive frequency weighting quantization may apply different quantization strengths per frequency using a predefined quantization scaling matrix. In other words, the above-described quantization/dequantization process may be performed further based on a quantization scaling matrix. For example, depending on the size of the current block and/or whether the prediction mode applied to the current block to generate the residual signal of the current block is inter prediction or intra prediction, different quantization scaling matrices may be used. The quantization scaling matrix may also be referred to as a quantization matrix or a scaling matrix. The quantization scaling matrix may be predefined. In addition, for frequency adaptive scaling, quantization scale information per frequency for the quantization scaling matrix may be constructed/encoded in the encoder and signaled to the decoder. The quantization scale information per frequency may be referred to as quantization scaling information. The quantization scale information per frequency may include scaling list data. A (modified) quantization scaling matrix may be derived based on the scaling list data. The quantization scale information per frequency may also include present flag information indicating whether the scaling list data is present. Alternatively, when the scaling list data is signaled at a higher level (e.g., sequence level, feature set group level, etc.), it may further include information indicating whether the scaling list data is modified at a lower level (e.g., feature set level, channel level, etc.).

Feature quantization/dequantization may be performed based on a predetermined quantization group. Specifically, a plurality of quantization intervals may be set based on the data distribution characteristics of a feature set. The set quantization intervals may have different data distribution ranges and may be defined as one quantization group. Then, the feature quantization/dequantization operation may be performed by converting the data distribution of each channel within the feature set into one of the data distribution ranges of the quantization intervals.

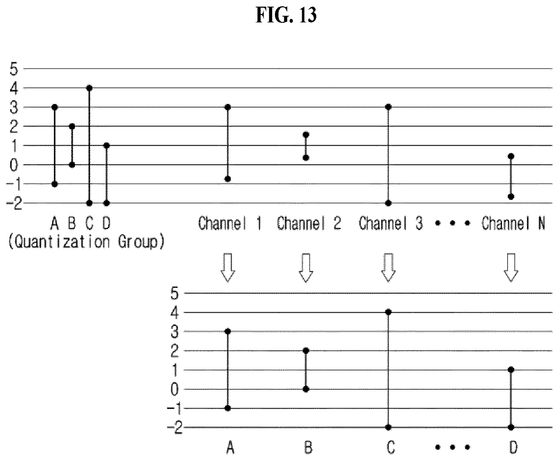

FIG. 13 is a diagram illustrating an example of a quantization group to which embodiments of the present disclosure may be applied.

Referring to FIG. 13, a quantization group may include four quantization intervals (A, B, C, or D) with different data distribution ranges. Each of the quantization intervals (A, B, C, or D) in the quantization group may be defined using a minimum value and a maximum value, and may be set based on the data distribution characteristics of the current feature/feature map. For example, quantization interval A may be set to [-1, 3], quantization interval B to [0, 2], quantization interval C to [-2, 4], and quantization interval D to [-2, 1].

The VCM encoder may quantize each channel (or, feature) within a feature set based on predefined quantization intervals (A, B, C, or D), without needing to separately calculate the maximum value and minimum value of feature elements. For example, Channel 1 may be quantized based on quantization interval A having the most similar data distribution range. In addition, Channel 2 may be quantized based on quantization interval B having the most similar data distribution range. In addition, Channel 3 may be quantized based on quantization interval C having the most similar data distribution range. In addition, Channel 4 may be quantized based on quantization interval D having the most similar data distribution range. In this case, the VCM encoder may encode/signal the number of quantization intervals, the minimum value, and the maximum value as feature quantization related information. In addition, the VCM encoder may also signal quantization interval index information indicating the quantization interval used for encoding the current channel (or, feature) as feature quantization related information. Accordingly, it is not necessary to signal the number of quantization bits per channel and the maximum value and minimum value of the feature elements, so the amount of transmission bits may be reduced and the efficiency of encoding/signaling may be further improved.

The VCM decoder may construct the identical quantization group as the quantization group constructed by the VCM encoder based on the number of quantization intervals and the minimum value and maximum value of each interval received from the feature encoding apparatus. Alternatively, the VCM decoder may construct a quantization group based on the data distribution characteristics of the pre-reconstructed feature sets. Then, the VCM decoder may perform dequantization of the current feature based on the quantization interval identified by the quantization interval index information received from the VCM encoder.

Feature quantization based on the quantization group may be calculated as follows.

[Equation 1]

$$F_{norm} = \frac{F_n - min(F_n)}{max(F_n) - min(F_n)}$$

Here, Fn may represent the n-th channel (where n is an integer greater than or equal to 1) of the feature set (Fset$^{RxC}$). Also, R may represent the width of the feature set, C may represent the height of the feature set, max(Fn) may represent the maximum value of the feature elements within the n-th channel (Fn), and min(Fn) may represent the minimum value of the feature elements within the n-th channel (Fn).

Referring to the above equation, the n-th channel (Fn) may be normalized to have feature element values between 0 and 1 based on the maximum value and minimum value of the feature elements within the channel.

[Equation 2]

$$F_{n^G} = F_{n^{norm}} \cdot \left( max(F_{G_m}) - min(F_{G_m}) \right) + min(F_{G_m})$$

Here, Fn$^{norm}$ may represent the normalized n-th channel of the feature set (Fset$^{RxC}$). Additionally, R may represent the width of the feature set, C may represent the height of the feature set, max(F$_{Gm}$) may represent the maximum value of the quantization interval (F$_{Gm}$) applied to the n-th channel (Fn), and min(F$_{Gm}$) may represent the minimum value of the quantization interval (F$_{Gm}$) applied to the n-th channel (Fn).

Referring to the above equation, the normalized n-th channel (Fn$^{norm}$) may be quantized based on the maximum value (max(F$_{Gm}$)) and the minimum value (min(F$_{Gm}$)) of the quantization interval (F$_{Gm}$) applied to the n-th channel (Fn).

Meanwhile, for dequantization, quantization related information may be encoded in the bitstream. According to an embodiment, the quantization related information may include overall quantization information, activation function information, the number of quantization bits, and quantization interval index information. The overall quantization information may indicate whether the number of quantization bits is set for each quantization interval individually or set equally for all quantization intervals. The activation function information may indicate the type of activation function applied to the current feature. For example, the activation function information may indicate whether the activation function applied to the current feature is a first activation function that requires both the maximum value and minimum value of each quantization interval to be signaled, or a second activation function that requires only the maximum value of each quantization interval to be signaled. The number of quantization bits may be set for each quantization interval based on the above-described overall quantization information, or may be set equally for all quantization intervals. When the number of quantization bits is set equally for all quantization intervals, the number of quantization bits may be signaled only once for all quantization intervals.

In addition, the quantization related information may further include the number of quantization intervals within the quantization group and the minimum value and maximum value of each quantization interval. In this case, the minimum value and maximum value of each quantization interval may be adaptively signaled based on the type of activation function. For example, when the activation function applied to the current feature is the first activation function (e.g., Leaky ReLU), both the minimum value and maximum value of each quantization interval may be signaled. In contrast, when the activation function applied to the current feature is the second activation function (e.g., ReLU), the minimum value of each quantization interval may be assumed to be 0, and only the maximum value of each quantization interval may be signaled.

## Embodiment

The present disclosure may be based on VCM, which is intended not only for conventional video coding technology but also for performing a machine task. Meanwhile, in VCM, the attributes of the required information may differ depending on the type of machine task to be performed. The conventional quantization process assumes that it is processed by human viewing, in other words, by a human, and is optimized solely for that purpose, so it has limitations in efficiently handling information of various attributes required for machine tasks.

The present disclosure relates to the definition and representation method of attribute and purpose information of a VCM bitstream according to a quantization optimization method for a VCM bitstream that may solve the problems of the prior art described above. In the present disclosure, a quantization optimization method aimed at improving performance in machine perception and the attributes of information required for the optimization method is defined, and an image encoding and decoding method based thereon is proposed. More specifically, as an embodiment, the present disclosure proposes a quantization method for machine perception and a method of representing image purpose and attribute of information in a VCM bitstream according to its application. In addition, as an embodiment, the present disclosure proposes a method for optimizing quantization targeting for improvement in machine perception performance, and a method for defining attributes of encoded information and an applied optimization method that enables selection of a VCM bitstream and coding method suitable for a machine task to be performed.

Meanwhile, although the terms feature and video are distinguished above, it is for clarity of explanation, the term "video" as used in the present disclosure may collectively refer to a feature/video/image/image data, etc. In other words, the content described below as being applicable to a video may also be applied to a feature, an image, image data, etc., and vice versa. In other words, the embodiments described below in terms of image data, a feature, etc. may also be applicable to a video.

Meanwhile, the quantization (optimization) method according to an embodiment of the present disclosure, as described below, may be applied in reverse in the dequantization process.

Hereinafter, an embodiment of the present disclosure will be described in detail with reference to the drawings.

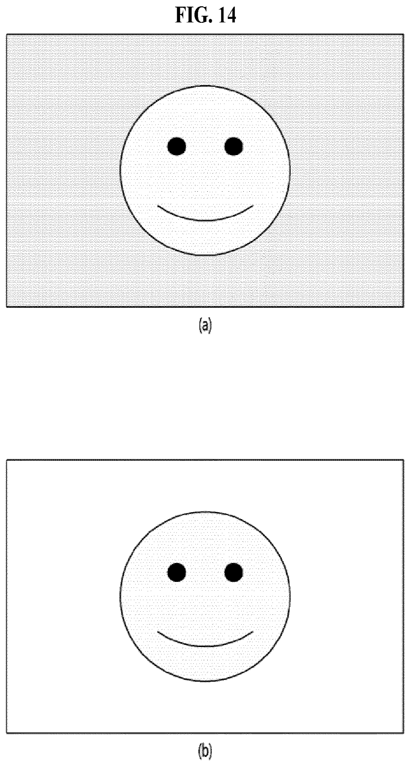

FIG. 14 illustrates an example of an image with a different attribute according to an embodiment of the present disclosure. When the purpose of the video changes, in other words, for example, when the processing object changes, such as machine perception or human perception, etc., images with different attributes may be required. For example, unlike VCM based on machine perception, the Human Visual System (HVS) may have characteristics in that it is sensitive to quality changes in low-frequency components but less sensitive to quality changes in high-frequency components compared to quality changes in low-frequency components. Based on such characteristics of HVS, quantization may be optimized in a manner that enhances quality in the low-frequency domain and reduces quality in the high-frequency domain. As an example, the HVS-based quantization optimization method may be referred to as frequency-based quantization optimization (FQO). Equation 3 below shows an example of applying FQO.

[Equation 3]

$$QP_k = QP - 3\log_2(w_k)$$

$$w_k = (\frac{\alpha_{pic}}{a_k})\beta$$

$$a_k = max(a^2_{min}, (\frac{1}{N^2}\sum_{(i,j)\in B_k}|h_x(i,j)|)^2)$$

$$h_x = x * F$$

$$F = \frac{1}{4}\cdot\begin{bmatrix}-1 & -2 & -1\\-2 & 12 & -2\\-1 & -2 & -1\end{bmatrix}$$

In the above equation, $w_k$ may represent a weight, QP may represent a quantization parameter, and $QP_k$ may represent an optimized quantization parameter after FQO. As an example, as $w_k$, which represents a weight, becomes greater, $QP_k$ may become smaller, and accordingly, the encoding bit amount and quality may increase. Here, $w_k$ has a structure that become greater as $a_k$ becomes smaller, and $a_k$ may represent the average of high-frequency components as the average of values obtained by applying a Laplacian filter F, which is a high pass filter, to the encoding target. In addition, $a_k$ may be referred to as the region-wise frequency sensitivity of the encoding target. In other words, when $w_k$ gets greater than 1 due to the value of $a_k$, accordingly, $QP_k$ may decrease. On the other hand, when $w_k$ gets smaller than 1 due to the value of $a_k$, accordingly, $QP_k$ may increase. In other words, the quantization parameter $QP_k$ may be based on the frequency $a_k$ and/or the weight $w_k$. Through this, more bits may be allocated to the encoding of low frequency regions that are sensitively perceived by the HVS, thereby improving the quality of those areas, and fewer bits may be allocated to the encoding of high frequency regions that are not sensitively perceived, thereby reducing their quality.

However, such FQO may be effective for human perception but inefficient for other purposes, for example, it may be inefficient for machine perception. In the case of images based on machine perception, performing specific task (e.g., object detection, object tracking, etc.) may be a purpose, the required attributes of the information may vary depending on the purpose of the image. Therefore, uniformly applied FQO according to region-wise frequency sensitivity may be inefficient for machine perception. Describing an embodiment of the present disclosure referring to images with different attributes shown in FIG. 14, it is assumed that the machine task to be performed on both images is face recognition. In FIG. 14(a), complex patterns are distributed in the background area, so the region-wise frequency sensitivity indicating the magnitude of high-frequency components in the background may appear high. On the other hand, in FIG. 14(b), the background is flat and unchanging, so the region-wise frequency sensitivity may appear low. Assuming that FQO is applied to both images in FIG. 14, in the case of FIG. 14(a), it may be possible to reduce the bit amount of the background area, which is unnecessary for the machine task of face recognition, and increase the bit amount of the face area required for preforming machine task, thereby improving the performance of the machine task and encoding efficiency. In contrast, when FQO is applied to FIG. 14(b), it may increase the bit amount of the unnecessary background area for performing machine task of face recognition, thereby decreasing coding efficiency. As such, when the purpose is to perform a machine task, it may be necessary not to increase the bit amount even in areas with low frequency sensitivity in terms of human perception. Therefore, it may be necessary to optimize and apply FQO in consideration of the attributes of information required for the machine task and the environment in which the machine task is performed (e.g., background, lighting, etc.). As an example, in order to allow the receiving side of the image to select an appropriate coding method or encoded bitstream according to the purpose, the purpose and usage (e.g., for machine task, for human perception, etc.) of the bitstream and information on the optimization method may need to be included in the bitstream. In the present disclosure, the FQO optimized for the purpose of performing machine tasks is defined as Machine perceptual Quantization Optimization (QO), and the FQO for human perception may be defined as Human perceptual Quantization Optimization (QO).

Meanwhile, the quantization (optimization) method according to an embodiment of the present disclosure described above and below may be applied in reverse in the dequantization process.

The embodiment described below with reference to Table 1 relates to a method of representing, in a bitstream, a quantization method optimized for a machine task and information on the applied quantization method. Table 1 below shows an example of machine task performance according to the application of FQO. In Table 1 below, the machine task performance is represented in terms of Bit Per Pixel (BPP) and Mean Average Precision (mAP).

[Table 1]

|  | FQO off | | FQO on | |
| --- | --- | --- | --- | --- |
| QP | BPP | mAP | BPP | mAP |
| 22 | 0.863 | 78.931 | 1.015 | 78.518 |
| 27 | 0.509 | 78.025 | 0.575 | 78.400 |
| 32 | 0.287 | 77.218 | 0.300 | 77.335 |
| 37 | 0.153 | 74.062 | 0.154 | 75.640 |
| 42 | 0.077 | 68.582 | 0.087 | 71.548 |
| 47 | 0.037 | 57.896 | 0.043 | 61.479 |
|  |  |  | BD-rate | -15.17% |

According to Table 1, when FQO is applied, BPP is increased at all QPs, and the performance of the machine task may also be improved except for QP22. When FQO is applied, the quality and bit amount of low frequency sensitivity region may be increased, and the quality and bit amount of high frequency sensitivity region may be decreased. In the case of QP22, the degradation in machine task performance caused by the quality reduction in high frequency sensitivity region may have a more significant impact on the overall performance than the improvement gained from enhancing the quality of low frequency sensitivity region. However, since there may still be information necessary for machine task performance in high frequency sensitivity region, it may be necessary to redefine the criteria for determining high frequency sensitivity region based on machine perception rather than HVS. Similarly, the criteria for determining low frequency sensitivity region may also need to be redefined based on machine perception rather than HBS to minimize the increase in bit amount.

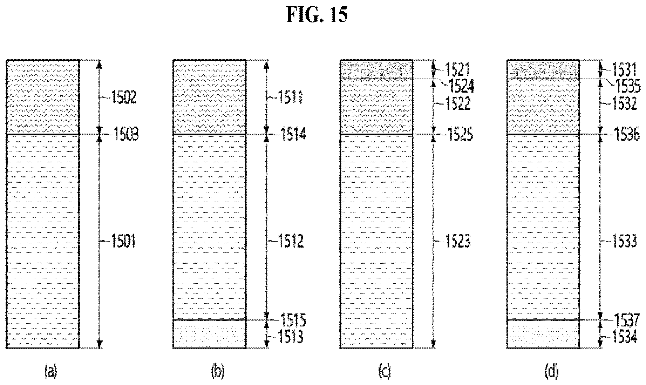

Figure 15 illustrates an example of frequency sensitivity determination criteria according to an embodiment of the present disclosure. More specifically, it illustrates examples of general frequency sensitivity determination criteria and frequency sensitivity determination criteria for machine perception. Figure 15(a) shows an example of the frequency sensitivity determination criteria in human perceptual FQO according to an embodiment of the present disclosure, while Figure 15(b) shows an example of the frequency sensitivity determination criteria in machine perceptual FQO. Figure 15(c) illustrates an example of a region unnecessary for machine task performance based on defining a high level threshold according to an embodiment of the present disclosure, and Figure 15(d) shows an example to which both a high level threshold and a low level threshold are applied.

As an example, in human perceptual FQO referring to Figure 15(a), the entire image may be divided into a low frequency sensitivity region 1501 and a high frequency sensitivity region 1502. For the purpose of dividing such regions, global frequency sensitivity 1503 may be used. In this case, based on the frequency sensitivity of the entire image, the region with frequency sensitivity greater than a specific value (e.g., a high level threshold) may reduce a bit amount, and the region with frequency sensitivity less than the specific value may increase the bit amount. In other words, the bit amount of the high frequency sensitivity region 1502 may be decreased, and the bit amount of the low frequency sensitivity region 1501 may be increased. As an example, according to Equation 1, the bit amount may increase as the frequency sensitivity becomes smaller.

According to an embodiment of the present disclosure, criteria for frequency sensitivity determination for avoiding increase in bit amount may be provided. Referring to Figure 15(b), an example of method for determining regions with small amount of information change that are unnecessary for machine task performance may be presented by defining a low level threshold according to an embodiment of the present disclosure. As an example, the entire image may be divided into a high frequency sensitivity region 1511, a medium frequency sensitivity region 1512, and a low frequency sensitivity region 1513. For distinguishing between such regions, global frequency sensitivity 1514 and a low level threshold 1515 may be used. As an example, a region with very low frequency sensitivity (e.g., 1513) may be a smooth region with little information change and may be considered unnecessary for machine task performance. Therefore, in this example, the low frequency sensitivity region in Figure 15(a) is divided into two regions - medium frequency sensitivity region and low frequency sensitivity region - so that the bit amount of the region with low frequency sensitivity and less information necessary for performing the machine task may be controlled.

According to another embodiment of the present disclosure, a criterion for determining frequency sensitivity may be presented in order to avoid degradation in machine task performance. Even in high frequency sensitivity region shown in Figure 15 (a), information necessary for performing a machine task may be distributed, and reducing the bit amount uniformly in such regions may result in degradation of machine task performance. For example, in the case of QP22 in Table 1, it is shown that although the bit amount has increased, the machine task performance has degraded. Accordingly, Figure 15 (c) shows an example of a method for determining a region unnecessary for performing a machine task by defining a high level threshold according to an embodiment of the present disclosure. According to Figure 15 (c), the entire image may be classified into a very high frequency sensitivity region 1521, a high frequency sensitivity region 1522, and a low frequency sensitivity region 1523, and a high level threshold 1524, a global frequency sensitivity 1525, etc. may be used to distinguish such regions. In this case, even when a region is determined to be of high frequency sensitivity by FQO, when the frequency sensitivity is lower than the high level threshold, in other words, in the case of a specific region 1522, the bit amount may be adjusted differently from the FQO. However, a region 1521 with frequency sensitivity higher than the high level threshold 1524 may likely be unnecessary information for performing a machine task, for example, due to its similarity to noise.

Meanwhile, Figure 15 (d) shows an example in which both a high level threshold and a low level threshold are applied according to an embodiment of the present disclosure. According to Figure 15 (d), the entire image may be classified into a very high frequency sensitivity region 1531, a high frequency sensitivity region 1532, a medium frequency sensitivity region 1533, and a low frequency sensitivity region 1534. To classify such regions, a high level threshold 1535, a global frequency sensitivity 1536, and a low level threshold 1537 may be used. In this case, the low frequency sensitivity region 1534 and the very high frequency sensitivity region 1531 may be determined to be regions of low importance from the viewpoint of machine perception.

According to an embodiment of the present disclosure, by subdividing regions within the entire image based on frequency as shown in Figure 15, the image may be classified based on the image purpose such as human perception, machine perception, etc., thereby improving coding performance.

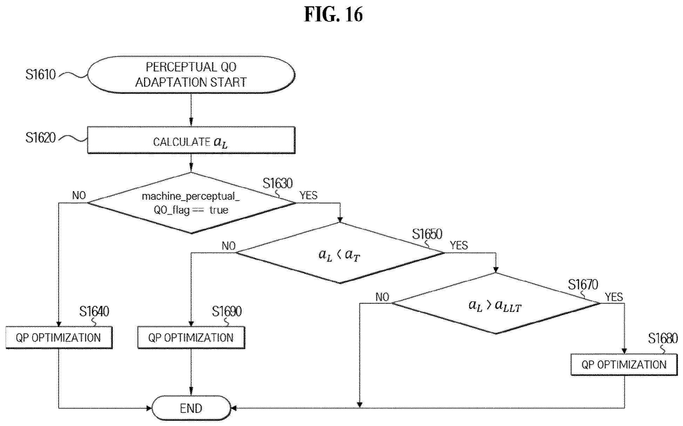

Figure 16 illustrates an example of an operation of an image encoder or decoder based on the frequency sensitivity determination criteria according to an embodiment of the present disclosure. More specifically, Figure 16 shows an example of an operation of an image encoder or decoder applying the determination criterion of Figure 15. As an example, Figure 16 may represent an operation of an image encoder or decoder based on a low level threshold.

As an example, perceptual QO adaptation may be the begin of process S1610. The perceptual QO adaptation may refer to the series of processes in Figure 16 and may include steps S1620, S1630, S1640, S1650, S1660, S1670, etc.

As an example, the calculation of $a_L$ may be performed S1620. The variable $a_L$ may represent the frequency sensitivity of the encoding target region and may correspond to $a_k$ of Equation 1. For example, S1620 may include a process of calculating the frequency sensitivity of the encoding target region based on Equation 1.

Thereafter, whether to apply encoding optimization for performing a machine task may be determined S1630. S1630 may be performed based on a specific syntax. For example, in an encoder, the process of determining the value of the specific syntax and/or the process of determining whether to apply optimization based on the value of the specific syntax may be included, and in a decoder, the process of determining whether to apply optimization based on the value of the specific syntax may be included. Meanwhile, the specific syntax may be a syntax machine_perceptual_QO_flag. For example, the syntax machine_perceptual_QO_flag may indicate whether encoding optimization for performing a machine task is applied. As an example, when the value of the syntax is a first value (e.g., true, 1), it may indicate that optimization for the machine task has been applied. In other words, it may indicate that machine perceptual QO, in which frequency sensitivity determination criteria such as a low level threshold and/or a high level threshold are applied, has been applied. On the other hand, when the value of the syntax is a second value (e.g., false, 0), it may indicate that optimization for the machine task has not been applied. In this case, a conventional human perceptual QO may have been applied to the encoded bitstream. The decoder may recognize the attribute and purpose of the encoded bitstream through the defined syntax machine_perceptual_QO_flag.

When it is determined that encoding optimization for performing a machine task is not applied, another type of QP optimization S1640 may be performed. On the decoder side, dequantization may be performed based on the QP optimization method performed on the encoder side. In this case, the QP optimization may be a human perception-based QP optimization, may be FQO, or may be another method.

Meanwhile, when it is determined that encoding optimization for performing a machine task is applied, an operation may be performed based on the comparison result between the region-wise frequency sensitivity and the frequency sensitivity of the entire image. Firstly, as an example, the comparison between $a_T$ and $a_L$ may be performed S1650. As an example, it may be determined whether $a_L$ is less than ar. As an example, $a_T$ may be the frequency sensitivity determination criterion, such as the global frequency sensitivity described above, the frequency sensitivity of the entire image in FIG. 15, or $a_{pic}$ of Equation 1. The variable $a_L$ may represent the frequency sensitivity of the encoding target region and may correspond to $a_k$ of Equation 1. The QP optimization method may vary depending on the result of S1650.

Thereafter, an operation may be performed based on the comparison result between the region-wise frequency sensitivity and the frequency sensitivity of the entire image. When the result of S1650 is true, in other words, $a_L$ is less than $a_T$, the comparison between $a_{LLT}$ and $a_L$ may be performed S1670, and $a_{LLT}$ may represent a low level threshold for machine perception. In this case, when the result of S1670 is true, in other words, $a_L$ exceeds $a_{LLT}$, QP optimization may be applied S1680. In this case, it may be determined that the region is a high frequency region, and the bit amount assigned to the region may have been reduced. On the decoder side, dequantization may be performed based on the QP optimization method performed on the encoder side. For example, the QP optimization may be machine perception-based QP optimization, and in this case, the bit amount assigned to the region may be increased. On the other hand, when the result of S1670 is false, in other words, when $a_L$ is equal to or less than $a_{LLT}$, it corresponds to the case where the region-wise frequency sensitivity is equal to or less than the low level threshold, so QP optimization may not be applied. In this case, even though the region-wise frequency sensitivity is less than the frequency sensitivity of the entire image, the bit amount may not be increased.

Meanwhile, when the result of S1650 is false, in other words, $a_L$ is not less than $a_T$, QP optimization may be applied S1690. In this case, it may be determined that the region is unnecessary for the machine task, such as a high frequency region (high activity area), and the bit amount of the region may be reduced. On the decoder side, dequantization may be performed based on the QP optimization method performed on the encoder side.

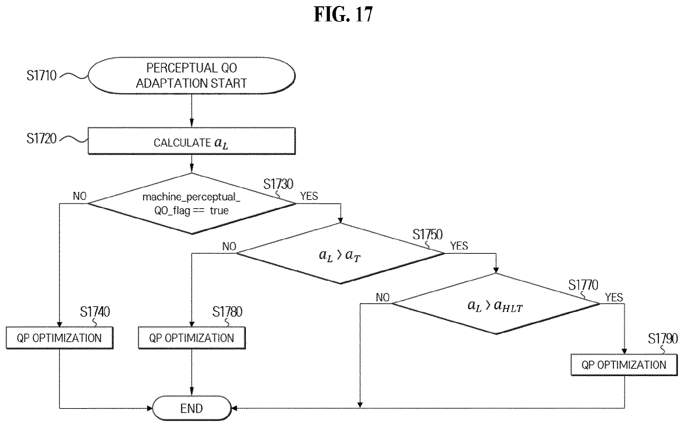

FIG. 17 illustrates an example of an operation of an image encoder or decoder based on frequency sensitivity determination criteria according to another embodiment of the present disclosure. More specifically, FIG. 17 illustrates an example of the operation of an image encoder or decoder to which the determination criteria in FIG. 15 is applied. As an example, FIG. 17 may illustrate an example of an operation of an image encoder or decoder based on a high level threshold.

As an example, perceptual QO adaptation may be the begin of process S1710. The perceptual QO adaptation may refer to a series of processes shown in FIG. 17, and may include steps S1720, S1730, S1740, S1750, S1760, S1770, etc.

As an example, the calculation of $a_L$ may be performed S1720, and thereafter, whether to apply encoding optimization for performing a machine task may be determined S1730. Subsequently, when it is determined that encoding optimization for performing a machine task is not applied, another type of QP optimization may be performed S1740. The QP optimization performed here may include human perception-based QP optimization, in other words, FQO. In this case, S1720 may correspond to S1620 in FIG. 16, S1730 may correspond to S1630 in FIG. 16, and S1740 may correspond to S1640 in FIG. 16, so repeated descriptions will be omitted.

Meanwhile, when it is determined that encoding optimization for performing a machine task is applied, an operation may be performed based on the comparison result between the region-wise frequency sensitivity and the frequency sensitivity of the entire image. Firstly, as an example, the comparison between $a_T$ and $a_L$ may be performed S1750. As an example, it may be determined whether $a_L$ is greater than $a_T$. As an example, $a_T$ may be the frequency sensitivity for the entire image of FIG. 15, as a criteria for frequency sensitivity determination, i.e., a threshold, and may be $a_{pic}$ of Equation 1. As an example, the variable $a_L$ may represent the frequency sensitivity of the encoding target region and may correspond to $a_k$ of Equation 1. The QP optimization method may vary depending on the result of S1750.

Subsequently, an operation may be performed based on the comparison result between the region-wise frequency sensitivity and the frequency sensitivity of the entire image. When the result of S1750 is true, in other words, when $a_L$ is greater than ar, the comparison between $a_{HLT}$ and $a_L$ may be performed S1770, where $a_{HLT}$ may represent a high level threshold for machine perception. In this case, it may be determined as a very high frequency region, QP optimization may be performed S1780, and the bit amount allocated to the region may be reduced. In this case, when the result of S1770 is false, in other words, when $a_L$ is less than $a_{HLT}$, QP optimization for reducing the bit amount may not be applied. In other words, since the region-wise frequency sensitivity is less than the high-level threshold, the region may be classified as a valid region when machine processing, i.e., a region including valid data and may be processed without reducing the bit amount and without QP optimization. Meanwhile, when the result of S1750 is false, in other words, when $a_L$ is less than or equal to $a_T$, QP optimization may be applied S1780. In this case, the region may be determined as unnecessary for the machine task, and the bit amount may be reduced. The QP optimization described above may be machine perception-based QP optimization, and in this case, the bit amount assigned to the region may have been either increased or decreased.

In the case of S1740, S1780, and S1790, dequantization may be performed on the decoder side based on the QP optimization method performed on the encoder side.

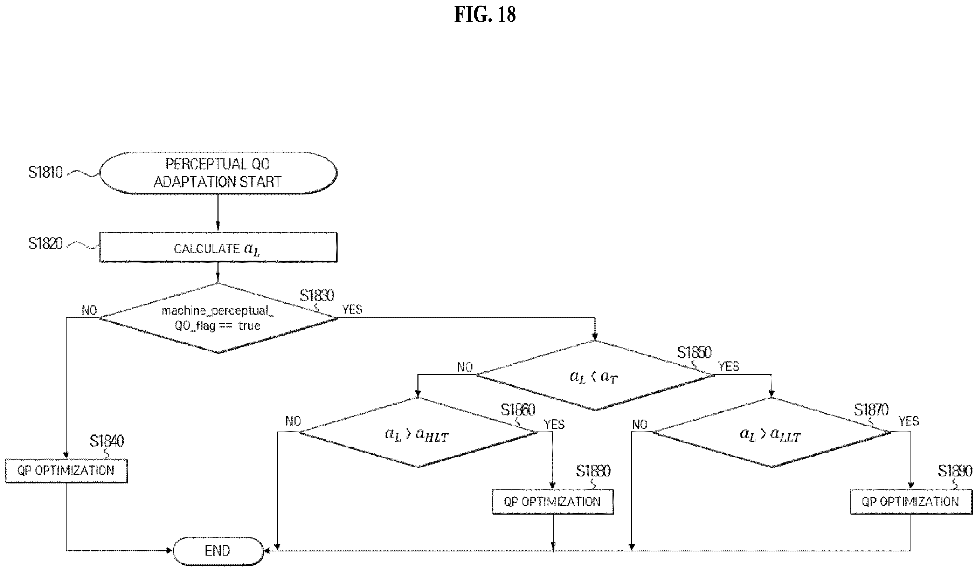

FIG. 18 illustrates an example of an operation of an image encoder or decoder based on frequency sensitivity determination criteria according to another embodiment of the present disclosure. More specifically, FIG. 18 illustrates an example of the operation of an image encoder or decoder to which the determination criteria in FIG. 15 is applied. As an example, FIG. 18 may illustrate an example of an operation of an image encoder or decoder based on a high level threshold.

As an example, perceptual QO adaptation may begin first S1810. The perceptual QO adaptation may refer to a series of processes shown in FIG. 18 and may include steps S1820, S1830, S1840, S1850, S1860, S1870, etc.

As an example, the calculation of $a_L$ may be performed S1820, and thereafter, whether to apply encoding optimization for performing a machine task may be determined S1830. Subsequently, when it is determined that encoding optimization for performing a machine task is not applied, another type of QP optimization may be performed S1840. The QP optimization performed here may include human perception-based QP optimization, in other words, FQO. In this case, S1820 may correspond to S1620 in FIG. 16, S1830 may correspond to S1630 in FIG. 16, and S1840 may correspond to S1640 in FIG. 16, so repeated descriptions will be omitted.

Meanwhile, when it is determined that encoding optimization for performing a machine task is applied, an operation may be performed based on the comparison result between the region-wise frequency sensitivity and the frequency sensitivity of the entire image. Firstly, as an example, the comparison between $a_T$ and $a_L$ may be performed S1850. As an example, it may be determined whether $a_L$ is less than $a_T$. As an example, $a_T$ may be the frequency sensitivity of the entire image shown in FIG. 15, as a frequency sensitivity determination criteria, in other words, a threshold, and may be $a_{pic}$ of Equation 1. As an example, the variable $a_L$ may represent the frequency sensitivity of the encoding target region and may correspond to $a_k$ of Equation 1. The QP optimization method may vary depending on the result of S1850.

Subsequently, an operation may be performed based on the comparison result between the region-wise frequency sensitivity and the frequency sensitivity of the entire image. When the result of S1850 is true, in other words, when $a_L$ is less than ar, the comparison between $a_{LLT}$ and $a_L$ may be performed S1870, and the value $a_{LLT}$ may represent a low level threshold for machine perception. When the result of S1870 is true, in other words, when the value of $a_{LLT}$ is less than $a_L$, QP optimization may be performed S1890, and in this case, it may be determined as a required region for the machine task, and the bit amount may be increased. On the other hand, when the result of S1870 is false, in other words, when $a_{LLT}$ is greater than $a_L$, QP optimization may not be applied. In this case, although the region-wise frequency sensitivity is less than the frequency sensitivity of the entire image, the bit amount may not be increased. This may be identical to the explanation given with reference to FIG. 16.

Meanwhile, when the result of S1850 is false, in other words, when $a_L$ is greater than or equal to $a_T$, a comparison between $a_{HLT}$ and $a_L$ may be performed S1860, and when the result of S1860 is true, in other words, when $a_L$ is greater than or equal to $a_{HLT}$, QP optimization for reducing the bit amount S1880 may be applied. In other words, it corresponds to the case where the region-wise frequency sensitivity is higher than the high level threshold, the region may not be classified as a valid region, in other words, a region including valid data, for machine processing, so QP optimization may be applied, and the bit amount for the region may be reduced. On the other hand, when the result of S1860 is false, in other words, when $a_L$ is less than or equal to $a_{HLT}$, QP optimization may not be applied. In this case, although the region-wise frequency sensitivity is greater than or equal to $a_T$, it is still less than or equal to the high level threshold, so the region may be determined as a region necessary for machine tasks and may be processed without reducing the bit amount. Meanwhile, the QP optimization described above may be machine perception-based QP optimization, and in this case, the bit amount assigned to the region may have been either increased or reduced.

In S1840, S1880, and S1890, the decoder may perform dequantization based on the QP optimization method performed by the encoder.

Hereinafter, a syntax for quantization optimization method according to an embodiment of the present disclosure will be described with reference to Table 2 through Table 6. Table 2 to Table 6 present examples of perceptual QO identification information. The perceptual QP identification information may be 1) defined in an conventional NAL unit, 2) based on a NAL unit type defined for identifying a perceptual quantization optimization (QO) method, or 3) configured based on supplemental enhancement information (SEI) defined for perceptual QO identification, etc.

[Table 2]

|  | Descriptor |
|---|---|
| machine_perceptual_QO_flag | u(1) |

According to the embodiment shown in Table 2, information regarding whether to apply the machine perception-based quantization optimization method may be obtained. As an example, the information may be referred to as a first syntax and may be referred to as machine_perceptual_QO_flag. As an example, the first syntax may be obtained from the bitstream. In other words, the first syntax may indicate whether the encoding optimization for machine task performance is applied. As an example, when the value of the first syntax is a first value (e.g., 1), it may indicate that the machine perception-based QO (machine perception-based or machine task-based quantization optimization) is applied. In contrast, when the value of the first syntax is a second value (e.g., 0), it may indicate that the machine perception-based QO is not applied.

[Table 3]

|  | Descriptor |
|---|---|
| perceptual_QO_flag | u(1) |
| If(perceptual_QO_flag) { |  |
| machine_perceptual_QO_flag |  |
| } |  |

[Table 4]

|  | Descriptor |
|---|---|
| perceptual_QO_flag | u(1) |
| If(perceptual_QO_flag){ |  |
| human_perceptual_QO_flag |  |
| } |  |

Tables 3 and 4 may illustrate examples of information for representing the application status and purpose of perceptual QP. Firstly, according to the embodiment shown in Table 3, information regarding whether the perceptual quantization optimization is applied (e.g., a second syntax) and the first syntax may be obtained. As an example, the first syntax may be obtained based on the second syntax. The second syntax may be referred to as, as an example, perceptual_QO_flag. When the value of the second syntax is a first value (e.g., 1) and the value of the first syntax is a first value (e.g., 1), it may indicate that the perceptual QO applied during coding is a quantization optimization method for machine tasks. In contrast, when the value of the second syntax is the first value but the value of the first syntax is a second value (e.g., 0), it may indicate that the perceptual QO applied during coding is not optimized method for machine tasks. In this case, for example, it may indicate that a perceptual QO method optimized for human perception is applied.

According to the embodiment shown in Table 4, information regarding whether the perceptual quantization optimization is applied (e.g., a second syntax) and a third syntax, information indicating whether the human perception-based quantization optimization is applied, (e.g., human_perceptual_QO_flag) may be obtained. As an example, the third syntax may be obtained based on the second syntax. When the second syntax (e.g., perceptual_QO_flag) is a first value (e.g., 1) and the third syntax (e.g., human_perceptual_QO_flag) is a first value (e.g., 1), it may indicate that the perceptual QO applied during coding is a quantization optimization method for human perception. Meanwhile, when the second syntax is the first value and the third syntax is a second value (e.g., 0), it may indicate that the perceptual QO applied during coding is not a quantization optimization method for human perception. In this case, it may indicate that the perceptual QO optimized for machine tasks is applied.

Meanwhile, in the case of Table 3 and Table 4, for clarity of explanation, the signaling of information indicating whether machine perception is applied (e.g., the first syntax, machine_perceptual_QO_flag) and the information indicating whether human perception is applied (e.g., the third syntax, human_perceptual_QO_flag) are shown separately, but this corresponds to an embodiment, so both the first syntax and the third syntax may be signaled together. In other words, the first syntax may be signaled as in Table 3, followed by the signaling of the third syntax, or the third syntax may be signaled as in Table 4, followed by the signaling of the first syntax, and this is also included in the embodiments of the present disclosure.

[Table 5]

|  | Descriptor |
|---|---|
| perceptual_QO_flag | u(1) |

(continued)

| If(perceptual_QO_flag) { | |
|---|---|
| optimization_method_idc | u(2) |
| } | |

[Table 6]

| optimization_method_idc | description |
|---|---|
| 0 | Human perceptual QO |
| 1 | Machine perceptual QO with low level threshold |
| 2 | Machine perceptual QO with high level threshold |
| 3 | Machine perceptual QO with low and high level threshold |

Table 5 illustrates an example of representing information regarding whether perceptual QO is applied and the quantization optimization method, and Table 6 illustrates an example of perceptual QO method that may be indicated by specific syntax in Table 5. According to the embodiment of Table 5, information regarding the quantization optimization method (e.g., a fourth syntax) and the second syntax may be obtained. As an example, the fourth syntax may be obtained based on the second syntax. The fourth syntax, as an example, may be referred to as optimization_method_idc and may be an optimization method indicator for quantization (dequantization). As an example, when the value of the second syntax is a first value (e.g., 1), the fourth syntax may be obtained. As an example, when the value of the fourth syntax is 0, it may indicate that a human perception-based QO is applied. When the value is 1, it may indicate that a machine perception-based QO is applied based on a low level threshold. When the value is 2, it may indicate that a machine perception-based QO is applied based on a high level threshold. When the value is 3, it may indicate that a machine perception-based QO is applied based on both a low level threshold and a high level threshold.

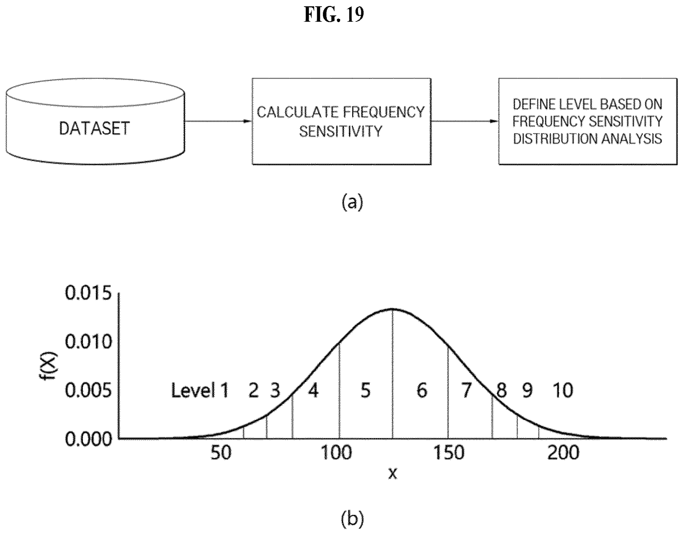

Meanwhile, depending on the machine task to be performed using the image, the characteristics of the required information may also vary. Therefore, the low level threshold and high level threshold that may be applied to the machine perception-based QO may vary depending on the attributes of the machine task, and in order for the decoding side to select a bitstream suitable for the machine task intended to be performed by the user, the encoding side may need to encode the information required for such selection. In other words, it may be necessary to code information that varies based on the attributes of the machine task. Accordingly, FIG. 19 may illustrate an example of defining a frequency sensitivity level according to an embodiment of the present disclosure. More specifically, FIG. 19(a) illustrates an example of a process for defining frequency sensitivity levels, and FIG. 19(b) illustrates an example of statistical characteristics of frequency sensitivity that may be used to define the frequency sensitivity levels.

Firstly, according to an embodiment of FIG. 19(a), a dataset may be obtained first, frequency sensitivity may be calculated based on the obtained dataset, and frequency sensitivity levels may be defined through analysis of the frequency sensitivity distribution. Through the process of FIG. 19(a), values representing the distribution and magnitude of frequency sensitivity, such as average and deviation, may be obtained. Using this, the statistical characteristics of frequency sensitivity may be analyzed as shown in FIG. 19(b), and based on this, frequency sensitivity levels may be defined. As an example, the frequency sensitivity levels may be defined as shown in Table 7 below.

[Table 7]

| Activity Level | Value |
|---|---|
| 10 | Mean+$(\sigma*7/3)$ < Frequency sensitivity < Mean+$3\sigma$ |
| 9 | Mean+$2\sigma$ < Frequency sensitivity < Mean+$(\sigma*7/3)$ |
| 8 | Mean+$(\sigma*3/2)$ < Frequency sensitivity < Mean+$2\sigma$ |
| 7 | Mean+$\sigma$ < Frequency sensitivity < Mean+$(\sigma*3/2)$ |
| 6 | Mean < Frequency sensitivity < Mean+$\sigma$ |
| 5 | Mean-$\sigma$ < Frequency sensitivity < Mean |
| 4 | Mean-$(\sigma*3/2)$ < Frequency sensitivity < Mean-$\sigma$ |
| 3 | Mean-$2\sigma$ < Frequency sensitivity < Mean-$(\sigma*3/2)$ |

(continued)

| Activity Level | Value |
|---|---|
| 2 | Mean-($\sigma$*7/3) < Frequency sensitivity < Mean-2$\sigma$ |
| 1 | Mean-3$\sigma$ < Frequency sensitivity < Mean-($\sigma$*7/3) |

As shown in Table 7, a range may be defined for each frequency sensitivity level. Each range may be defined by applying the average and deviation of the frequency sensitivity, and through this, the distribution ratio of information for each level may be identified. For example, when a high level threshold is determined as level 9, QP optimization may be performed for a region where the frequency sensitivity value is approximately 180 or higher, which indicates that QP optimization is applied to only about 2.3% of the total region. By defining each frequency sensitivity level according to such distribution characteristics, a threshold may also be defined according to the frequency sensitivity level required for each machine task and the bit amount optimization requirement.

Meanwhile, Table 8 through Table 15 below show examples of perceptual QO identifiers and frequency sensitivity level information according to an embodiment of the present disclosure. In the following embodiment, the information related to QO described with reference to the above tables is extended with additional definitions for information related to frequency sensitivity level, and the frequency sensitivity level information, along with the perceptual QO identification information, may be 1) defined in an conventional NAL unit, 2) based on a NAL unit type defined for identifying a perceptual quantization optimization (QO) method; or 3) configured based on supplemental enhancement information (SEI) defined for identifying perceptual QO.

Table 8 and Table 9 below may illustrate examples in which frequency sensitivity level information is additionally defined for the first syntax (e.g., machine_perceptual_QO_flag) defined in other tables above.

[Table 8]

|  | Descriptor |
|---|---|
| machine_perceptual_QO_flag | u(1) |
| if(machine_perceptual_QO_flag){ |  |
| threshold_coded_flag |  |
| if(threshold _coded_flag ){ |  |
| low level threshold idc |  |
| high_level_threshold_idc |  |
| } |  |
| } |  |

According to Table 8, based on the first syntax (e.g., machine_perceptual_QO _flag), a fifth syntax (e.g., threshold_coded_flag), a sixth syntax (e.g., low_level_threshold_idc), and/or a seventh syntax (e.g., high_level_idc) may be obtained. As an example, the sixth syntax and the seventh syntax may be further obtained based on the fifth syntax.

The first syntax machine_perceptual_QO_flag may indicate whether encoding optimization for performing a machine task is applied. The explanation of this is the same as described above with reference to other tables, and redundant description is omitted.

The fifth syntax threshold_coded_flag may indicate whether the frequency sensitivity level, which is a reference value for determining the frequency sensitivity level of the encoding target, is coded, and based on the value of first syntax (e.g., 1), it may be defined in the bitstream. When the value of the fifth syntax is a first value (e.g., 1), it may indicate that the frequency sensitivity level is encoded in the bitstream, and when the value is a second value (e.g., 0), it may indicate that the frequency sensitivity level is not encoded.

The sixth syntax low_level_threshold_idc may be an identifier indicating a low level threshold and may be defined in the bitstream based on the value of the fifth syntax (e.g., 1). As an example, the sixth syntax may be encoded to represent a value corresponding to the low level threshold among the frequency sensitivity levels defined in Table 7. Meanwhile, in the example of Table 7, the range of frequency sensitivity levels is defined as 1 to 10, and the range of the low level threshold may be defined as a subset of the frequency sensitivity level range. For example, the range of the low level threshold may be defined within the frequency sensitivity level range, such as 1 to 4.

The seventh syntax high_level_threshold_idc is an identifier indicating a high level threshold and may be defined in the bitstream based on the value of the fifth syntax (e.g., 1). As an example, the seventh syntax may be encoded to represent a value corresponding to the high level threshold among the frequency sensitivity levels defined in Table 7. As an the example, in the example of Table 7, the frequency sensitivity level range is 1 to 10, and the range of the high level threshold may be defined as a subset of the frequency sensitivity level range. For example, the range of the high level threshold may be defined within the frequency sensitivity level range, such as 7 to 10.

Meanwhile, Table 9 below signals the first syntax and the fifth syntax similarly to Table 8, but relates to an example in which the threshold itself is signaled.

[Table 9]

|  | Descriptor |
|---|---|
| machine_perceptual_QO_flag | u(1) |
| if(machine_perceptual_QO_flag){ |  |
| threshold_coded_flag |  |
| if(threshold_coded_flag ){ |  |
| low level threshold |  |
| high_level_threshold |  |
| } |  |
| } |  |

Since the content regarding the first syntax and the fifth syntax is the same as in Table 8 above, redundant description is omitted. Meanwhile, based on the value of the fifth syntax, a threshold (e.g., a low level threshold and/or a high level threshold) may be obtained, and the threshold is not obtained in the form of an indicator indicating the threshold as in Table 8, the threshold itself may be signaled in the bitstream. As an example, when the value of the fifth syntax is a first value (e.g., 1), an eighth syntax (e.g., low_level_threshold) indicating a low level threshold and/or a ninth syntax (e.g., high_level_threshold) indicating a high level threshold may be obtained. The eighth syntax low_level_thresholdmay indicate a low level threshold. While the sixth syntax low_level_threshold_idc is intended to identify the range to which the encoding target corresponds among the defined ranges, the eighth syntax low_level_thresholdmay represent the actual value of low frequency sensitivity determination criteria of the encoding target.

The ninth syntax high_level_thresholdmay indicate a high level threshold. While the seventh syntax high_level_threshold_idc is intended to identify the range to which the encoding target corresponds among defined ranges, the ninth syntax high_level_thresholdmay represent the actual value of high frequency sensitivity determination criteria of the encoding target.

Table 10 and Table 11 below represent examples in which frequency sensitivity level information is added to the expression method of whether to apply the perceptual QO and the purpose according to an embodiment of the present disclosure.

[Table 10]

|  | Descriptor |
|---|---|
| perceptual_QO_flag | u(1) |
| If(perceptual_QO_flag){ |  |
| machine_perceptual_QO_flag |  |
| if(machine_perceptual_QO_flag){ |  |
| threshold_coded_flag |  |
| if(threshold_coded_flag ){ |  |
| low_level_threshold_idc |  |
| high_level_threshold_idc |  |
| } |  |
| } |  |
| } |  |

Table 10 relates to an embodiment to which, in addition to the syntax in Table 8, a second syntax (e.g., perceptual_QO_flag) may be further obtained. As an example, the second syntax may be obtained before the first syntax (e.g., machine_perceptual_QO_flag) is obtained, and the first syntax may be obtained based on the value of the second syntax. In addition, a fifth syntax (e.g., threshold_coded_flag) may be obtained based on the value of the first syntax. Subsequently, based on the value of the fifth syntax, a sixth syntax (e.g., low_level_threshold_idc) and a seventh syntax (e.g., high_level_threshold_idc) may be obtained. Since the descriptions of the first syntax and the other syntax are the same as those of the syntax with the same names included in the other tables above, redundant description is omitted.

Meanwhile, Table 11 below similarly signals the first syntax and the fifth syntax as in Table 10, but relates to an example in which the threshold itself is signaled.

[Table 11]

|  | Descriptor |
|---|---|
| perceptual_QO_flag | u(1) |
| If(perceptual_QO_flag) { |  |
| machine_perceptual_QO_flag |  |
| if(machine_perceptual_QO_flag){ |  |
| threshold_coded_flag |  |
| if(threshold_coded_flag ){ |  |
| low_level_threshold |  |
| high_level_threshold |  |
| } |  |
| } |  |
| } |  |

The descriptions regarding the first syntax and the fifth syntax are the same as those in Table 10 above, and thus redundant explanations are omitted. Meanwhile, based on the value of the fifth syntax, threshold (e.g., a low level threshold and/or a high level threshold) may be obtained, and the threshold itself may be signaled directly in the bitstream, rather than being obtained as information in the form of an indicator indicating the threshold as in Table 10. As an example, when the value of the fifth syntax is a first value (e.g., 1), an eighth syntax (e.g., low_level_threshold) representing the low level threshold and/or a ninth syntax (e.g., high_level_threshold) representing the high level threshold may be obtained. The descriptions of the eighth syntax to the ninth syntax are the same as those described with reference to another table (e.g., Table 9), and thus redundant explanations are omitted. Table 12 and Table 13 below may respectively illustrate examples in which frequency sensitivity level information is additionally defined for a third syntax (e.g., human_perceptual_QO_flag), which is defined in another table instead of the first syntax (e.g., machine_perceptual_QO_flag) in the embodiments of Table 10 and Table 11.

[Table 12]

|  | Descriptor |
|---|---|
| perceptual_QO_flag | u(1) |
| If(perceptual_QO_flag) { |  |
| human_perceptual_QO_flag |  |
| if(!human_perceptual_QO_flag){ |  |
| threshold_coded_flag |  |
| if(threshold_coded_flag ){ |  |
| low_level_threshold_idc |  |
| high_level_threshold_idc |  |
| } |  |
| } |  |

(continued)

|  | Descriptor |
|---|---|
| } |  |

As an example, a second syntax (e.g., perceptual_QO_flag) may be obtained before a third syntax (e.g., human_perceptual_QO_flag) is obtained, and the third syntax may be obtained based on the value of the second syntax. In addition, a fifth syntax (e.g., threshold_coded_flag) may be obtained based on the value of the third syntax. Subsequently, based on the value of the fifth syntax, a sixth syntax (e.g., low_level_threshold_idc) and a seventh syntax (e.g., high_level_threshold_idc) may be obtained. The descriptions of the third syntax (e.g., human_perceptual_QO_flag) and other syntaxes are the same as the syntax with same names described with reference to other tables above, and thus redundant explanations are omitted.

Meanwhile, Table 13 below illustrates an example similar to Table 12, in which the second syntax, third syntax, and fifth syntax are signaled, but the threshold itself is signaled.

[Table 13]

|  | Descriptor |
|---|---|
| perceptual_QO_flag | u(1) |
| If(perceptual_QO_flag) { |  |
| human_perceptual_QO_flag |  |
| if(!human_perceptual_QO_flag){ |  |
| threshold_coded_flag |  |
| if(threshold_coded_flag ){ |  |
| low_level_threshold |  |
| high_level_threshold |  |
| } |  |
| } |  |
| } |  |

The descriptions of the second syntax, third syntax, and fifth syntax are the same as those described in Table 12 above, and thus redundant explanations are omitted. Meanwhile, based on the value of the fifth syntax, a threshold (e.g., a low level threshold and/or a high level threshold) may be obtained, and the threshold may not be obtained in the form of an indicator indicating the threshold as in Table 12, but the threshold itself may be signaled in the bitstream. As an example, when the value of the fifth syntax is a first value (e.g., 1), an eighth syntax (e.g., low_level_threshold) indicating the low level threshold and/or a ninth syntax (e.g., high_level_threshold) indicating the high level threshold may be obtained. The descriptions of the eighth syntax to the ninth syntax are the same as those described with reference to other tables (e.g., Table 9), and thus redundant explanations are omitted. Table 14 and Table 15 below respectively illustrate examples in which, in addition to the application of perceptual quantization optimization (perceptual QO) and the optimization method defined in the other table, information related to frequency sensitivity level is additionally defined.

Meanwhile, Table 15 below illustrates an example similar to Table 14, in which the second syntax, third syntax, and fifth syntax are signaled, but the threshold itself is signaled.

[Table 14]

|  | Descriptor |
|---|---|
| perceptual_QO_flag | u(1) |
| if(perceptual_QO_flag){ |  |
| optimization_method_idc | u(2) |
| if(optimization_method_idc!=0){ |  |
| threshold_coded_flag |  |

(continued)

|  | Descriptor |
|---|---|
| if(optimization_method_idc==1){ |  |
| low_level_threshold_idc |  |
| } |  |
| else if(optimization_method_idc==2){ |  |
| high_level_threshold_idc |  |
| } |  |
| else if(optimization_method_idc==3){ |  |
| low_level_threshold_idc |  |
| high_level_threshold_idc |  |
| } |  |
| } |  |
| } |  |

According to the embodiment shown in the table, the second syntax (e.g., perceptual_QO_flag) may first be obtained. Then, information on the quantization optimization method (e.g., a fourth syntax) and the second syntax may be obtained. As an example, the fourth syntax may be obtained based on the second syntax. The fourth syntax, as an example, may be referred to as optimization _method_idc, and may be an optimization method indicator. Subsequently, based on the value of the fourth syntax, the fifth syntax, sixth syntax, and/or seventh syntax may be obtained. As an example, when the value of the fourth syntax is a first value (e.g., 1), the sixth syntax (e.g., low _level_threshold_idc) may be obtained, and when the value of the fourth syntax is a second value (e.g., 2), the seventh syntax (e.g., high _level_threshold_idc) may be obtained. In contrast, when the value of the fourth syntax is a third value (e.g., 3), both the sixth syntax and seventh syntax may be obtained. In other cases, when the value of the fourth syntax is a fourth value (e.g., 0), the fifth syntax may not be obtained. The descriptions of the fourth syntax and other syntaxes are the same as those of the syntaxes with the same names described in the other tables above, and thus redundant explanations are omitted.

Meanwhile, Table 15 below illustrates an example similar to Table 14, in which the second syntax, fourth syntax, and fifth syntax are signaled, but the threshold itself is signaled.

[Table 15]

|  | Descriptor |
|---|---|
| perceptual_QO_flag | u(1) |
| if(perceptual_QO_flag){ |  |
| optimization_method_idc | u(2) |
| if(optimization_method_idc!=0){ |  |
| threshold_coded_flag |  |
| if(optimization_method_idc==1){ |  |
| low_level_threshold |  |
| } |  |
| else if(optimization_method_idc==2){ |  |
| high_level_threshold |  |
| } |  |
| else if(optimization_method_idc==3){ |  |
| low_level_threshold |  |
| high_level_threshold |  |

(continued)

|  | Descriptor |
|---|---|
| } |  |
| } |  |
| } |  |

The descriptions of the second syntax, fourth syntax, and fifth syntax are the same as those of Table 14 above, and thus redundant explanations are omitted. Meanwhile, based on the value of the fifth syntax, threshold (e.g., a low level threshold and/or a high level threshold) may be obtained, and the threshold may not be obtained in the form of an indicator indicating the threshold as in Table 14, but the threshold itself may be signaled in the bitstream. As an example, when the value of the fifth syntax is a first value (e.g., 1), an eighth syntax (e.g., low_level_threshold) indicating the low level threshold and/or a ninth syntax (e.g., high_level_threshold) indicating the high level threshold may be obtained. The descriptions of the eighth syntax and ninth syntax are the same as those described with reference to other tables (e.g., Table 9), and thus redundant explanations are omitted. According to the present disclosure, information that may vary depending on the type of task to be performed (e.g., a machine perception-based task, a human perception-based task, etc.) may be efficiently processed.

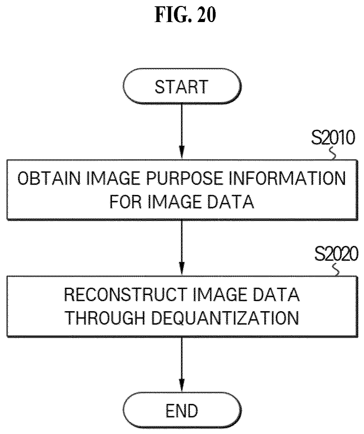

FIG. 20 is a diagram illustrating an image (data) decoding method according to an embodiment of the present disclosure. The image (data) decoding method of FIG. 20 may be performed by the image (data) decoder described above and may further include a process of performing dequantization based on the quantization optimization method, etc. described above with reference to the table.

As an example, image purpose information for image data may be obtained from a bitstream S2010. Then, by performing dequantization based on the image purpose information, the image data may be reconstructed S2020. As an example, the image purpose information may indicate at least one of whether the image data is for human perception or for machine perception. The image purpose information may include the first syntax, the second syntax, and/or the third syntax described above. Based on the image purpose information indicating that the image data is for machine processing, a frequency sensitivity level reference value of the image data may be derived. As an example, the frequency sensitivity level reference value may be derived based on a dequantization method indicator, and here, the dequantization method indicator may include the fourth syntax described above. Meanwhile, the frequency sensitivity reference level value may include at least one of a low level frequency sensitivity threshold or a high level frequency sensitivity threshold, and here, the frequency sensitivity reference level value may include at least one of the sixth syntax to ninth syntax described above. As an example, the frequency sensitivity reference level value may be signaled from the bitstream. In addition, the frequency sensitivity level reference value may be obtained based on a frequency sensitivity encoding flag indicating whether frequency sensitivity is encoded, and the frequency sensitivity encoding flag may include the fifth syntax described above. As an example, the frequency sensitivity encoding flag may be obtained based on the image purpose information.

As an example, the embodiment of FIG. 20 may include a dequantization process based on the embodiments described above with reference to the tables, and redundant explanation is omitted.

Meanwhile, the embodiment of FIG. 20 corresponds to an embodiment of the present disclosure, and therefore, some steps may be changed or omitted, or the order of some steps may be changed, or additional steps may be included, and such modifications are also considered as belonging to the scope of the present disclosure.

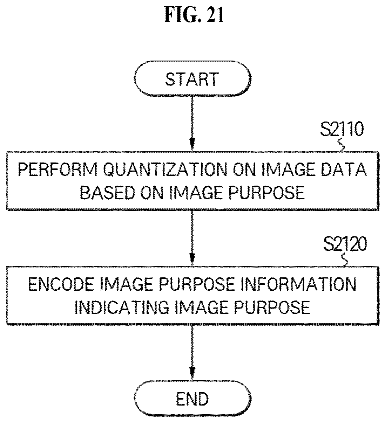

FIG. 21 is a diagram illustrating an image (data) encoding method according to an embodiment of the present disclosure. The image data encoding method of FIG. 21 may be performed by the image (data) encoder described above and may further include a process of performing quantization based on the quantization optimization method described above with reference to the tables. A quantization process may be performed on the image data by determining the image purpose for the image data S2110. Then, image purpose information indicating the image purpose may be encoded S2120. As an example, the image purpose information may indicate at least one of whether the image data is for human perception or for machine perception and may include the first syntax, the second syntax, and/or the third syntax as described above. Based on the image data being processed by machine, a frequency sensitivity level reference value of the image data may be determined. As an example, the frequency sensitivity level reference value may be derived based on a quantization method indicator, and here, quantization method indicator may include the fourth syntax described above. Meanwhile, the quantization of the image data may further be performed based on the frequency sensitivity level reference value of the image data. Meanwhile, the frequency sensitivity reference level value may include at least one of a low level frequency sensitivity threshold or a high level frequency sensitivity threshold, and here, the frequency sensitivity reference level value may include at least one of the sixth syntax to ninth syntax described above. In addition, the frequency sensitivity reference level value may be encoded into the bitstream. As an example, the frequency sensitivity reference level value may be signaled by being encoded into the bitstream. In addition, the frequency sensitivity level reference value may be determined based on whether frequency sensitivity is encoded, and such encoding status of the frequency sensitivity may be represented as a frequency sensitivity encoding flag, which may be encoded into the bitstream. The frequency sensitivity encoding flag may include the fifth syntax described above. As an example, whether to encode the frequency sensitivity may be determined based on the image purpose.

Meanwhile, a computer-readable medium for storing a bitstream generated by the image data encoding method described above may be proposed.

In addition, the bitstream generated by the above-described image data encoding method may be transmitted to an image (data) decoder, etc. The bitstream transmission method may include a step of transmitting the bitstream generated by the image data encoding method.

As an example, the embodiment of FIG. 21 may include a quantization process based on the embodiment described above with reference to the table, and a duplicate explanation thereof is omitted.

Meanwhile, since the embodiment of FIG. 21 corresponds to an embodiment of the present disclosure, some steps may be changed or omitted, the order of some steps may be changed, or other steps may be further added and this also corresponds to an embodiment of the present disclosure.

The names of all syntax elements described above are arbitrarily designated for the sake of clarity of description, and do not limit the names of the corresponding syntax elements. Also, the syntax elements may be referred to as information with different names, respectively. In addition, some syntax elements may be obtained from the bitstream, while others may be derived from other syntax element, and this also may be included in the embodiments of the present disclosure.

In addition, the bitstream generated by the image encoding method may be stored in a non-transitory computer-readable recording medium.

In addition, as another example, the bitstream generated by the image encoding method may be transmitted to another apparatus (e.g., an image decoding apparatus, etc.). In this case, the bitstream transmission method may include a process of transmitting the bitstream.

Although exemplary methods of the present disclosure are expressed as a series of operations for the clarity of explanation, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two. For example, each of the embodiments described above with reference to the drawings and tables may be combined or used independently.

Embodiments described in the present disclosure may be implemented and performed on a processor, a microprocessor, a controller or a chip. For example, functional units shown in each diagram may be implemented and performed on a computer, a processor, a microprocessor, a controller or a chip. In this case, information (e.g., information on instructions) or an algorithm for implementation may be stored in a digital storage medium.

In addition, a decoder (a decoding apparatus) and an encoder (an encoding apparatus) to which embodiment(s) of the present disclosure are applied may be included in a multimedia broadcasting transmitting and receiving device, a mobile communication terminal, a home cinema video device, a digital cinema video device, a surveillance camera, a video communication device, a real-time communication device such as a video communication, etc., a mobile streaming device, a storage medium, a camcorder, a video-on-demand (VoD) service providing device, an OTT video (Over the top video) device, an Internet streaming service providing device, a three-dimensional (3D) video device, a virtual reality (VR) device, an augmented reality (AR) device, a video phone video device, a transportation terminal (e.g., a vehicle (including an autonomous vehicle) terminal, a robot terminal, an airplane terminal, a ship terminal, etc.), a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

In addition, a processing method to which embodiment(s) of the present disclosure are applied may be produced in the form of a program executed by a computer and may be stored in a computer-readable recording medium. Multimedia data having a data structure according to embodiment(s) of the present disclosure may also be stored in a computer-readable recording medium. A computer-readable recording medium includes all types of storage devices and distributed storage devices where computer-readable data is stored. A computer-readable recording medium may include, for example, a Blu-ray disc (BD), a universal serial buse (USB), ROM, PROM, EPROM, EEPROM, RAM, CD-ROM, a magnetic tape, a floppy disk and an optical data storage device. In addition, a computer-readable recording medium includes media implemented in the form of a carrier (e.g., transmission via the Internet). In addition, a bitstream generated by an encoding method may be stored in a computer-readable recording medium or may be transmitted through a wired or wireless communication network.

In addition, embodiment(s) of the present disclosure may be implemented as a computer program product by a program code, and a program code may be executed on a computer by embodiment(s) of the present disclosure. A program code may be stored on a computer-readable carrier.

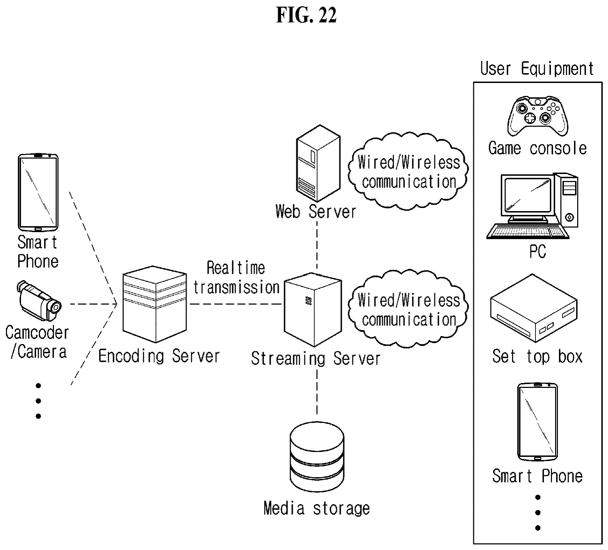

FIG. 22 is a diagram showing an example of a content streaming system to which embodiments of the present disclosure may be applied.

Referring to FIG. 22, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

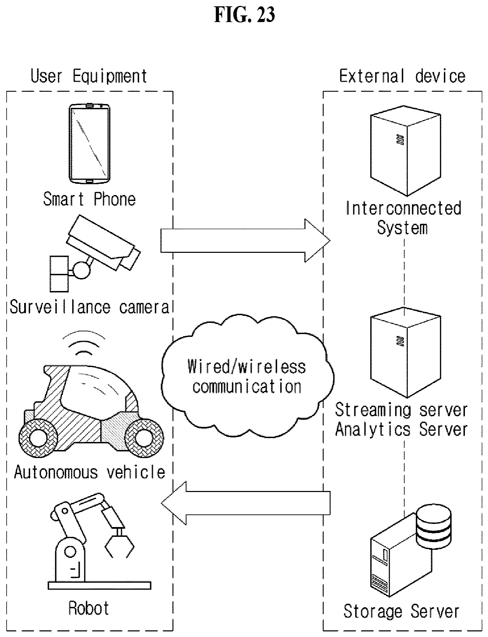

FIG. 23 is a diagram showing another example of a content streaming system to which embodiments of the present disclosure may be applied.

Referring to FIG. 23, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a fire fighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

[Industrial Applicability]

An embodiment according to the present disclosure may be used to encode/decode an image.

**Claims**

1. An image data decoding method performed by an image data decoding apparatus, comprising:

   obtaining image purpose information for the image data from a bitstream; and
   reconstructing the image data by performing dequantization based on the image purpose information,
   wherein the image purpose information indicates at least one of whether the image data is for human perception or for machine perception.

2. The image data decoding method of claim 1, wherein based on the image purpose information indicating that the image data is processed by a machine, a frequency sensitivity level reference value of the image data is derived.

3. The image data decoding method of claim 2, wherein the frequency sensitivity level reference value is derived based on a dequantization method indicator.

4. The image data decoding method of claim 2, wherein the frequency sensitivity reference level value includes at least one of a low level frequency sensitivity threshold or a high level frequency sensitivity threshold.

5. The image data decoding method of claim 2, wherein the frequency sensitivity reference level value is signaled from a bitstream.

6. The image data decoding method of claim 1, wherein the frequency sensitivity level reference value is obtained based on a frequency sensitivity encoding flag indicating whether frequency sensitivity is encoded.

7. The image data decoding method of claim 6, wherein the frequency sensitivity encoding flag is obtained based on the image purpose information.

8. An image data encoding method performed by an image data encoding apparatus, comprising:

   performing quantization for the image data by determining an image purpose for the image data; and
   encoding image purpose information indicating the image purpose,
   wherein the image purpose information indicates at least one of whether the image data is for human perception or for machine perception.

9. The image data encoding method of claim 8, wherein the quantization for the image data is performed further based on a frequency sensitivity level reference value of the image data.

10. The image data encoding method of claim 9, wherein the frequency sensitivity reference level value includes at least one of a low level frequency sensitivity threshold or a high level frequency sensitivity threshold.

11. The image data encoding method of claim 9, wherein the frequency sensitivity reference level value is encoded into a bitstream.

12. A computer-readable medium storing a bitstream generated by an image data encoding method, wherein the image data encoding method comprises:

   performing quantization for the image data by determining an image purpose for the image data; and
   encoding image purpose information indicating the image purpose,
   wherein the image purpose information indicates at least one of whether the image data is for human perception or for machine perception.

13. A bitstream transmission method, comprising:

   transmitting a bitstream generated by an image data encoding method,
   wherein the image data encoding method comprises:

      performing quantization for the image data by determining an image purpose for the image data; and
      encoding image purpose information indicating the image purpose,

wherein the image purpose information indicates at least one of whether the image data is for human perception or for machine perception.

**FIG. 1**

**FIG. 2**

**FIG. 3**

EP 4 672 748 A1

## FIG. 4

BITSTREAM → DECODING APPARATUS (400): ENTROPY DECODER (410) → DEQUANTIZER (421/420) → INVERSE TRANSFORMER (422) → (+) (440) → FILTER (450) → RECONSTRUCTED IMAGE (PICTURE); INTRA PREDICTOR (431/430); INTER PREDICTOR (432); MEMORY (460); DPB

**FIG. 5**

```
        ( START )
            |
            v
+---------------------------+
|         PREDICT           |~ S510
+---------------------------+
            |
            v
+---------------------------+
|     RESIDUAL PROCESS      |~ S520
+---------------------------+
            |
            v
+---------------------------+
|  ENCODE FEATURE/FEATURE MAP|
|  INFORMATION INCLUDING     |~ S530
|  PREDICTION INFORMATION    |
|  AND RESIDUAL INFORMATION  |
+---------------------------+
            |
            v
         ( END )
```

## FIG. 6

```
         ┌─────────┐
         │  START  │
         └─────────┘
              │
              ▼
┌──────────────────────────────┐
│  OBTAIN FEATURE/FEATURE MAP   │~── S610
│  INFORMATION FROM BITSTREAM   │
└──────────────────────────────┘
              │
              ▼
┌──────────────────────────────┐
│           PREDICT            │~── S620
└──────────────────────────────┘
              │
              ▼
┌──────────────────────────────┐
│       RESIDUAL PROCESS       │~── S630
└──────────────────────────────┘
              │
              ▼
┌──────────────────────────────┐
│  RECONSTRUCT FEATURE/FEATURE MAP │~── S640
└──────────────────────────────┘
              │
              ▼
┌──────────────────────────────┐
│   INLOOP FILTERING (optional) │~── S650
└──────────────────────────────┘
              │
              ▼
         ┌─────────┐
         │   END   │
         └─────────┘
```

## FIG. 7

```
                    710              720              730              740
                     │                │                │                │
            ┌────────────┐   ┌────────────┐   ┌────────────┐   ┌────────────┐
Image/Video │  Feature   │   │  Encoding  │   │  Decoding  │   │    Task    │
──────────▶ │ Extraction │──▶│ Apparatus  │──▶│ Apparatus  │──▶│  Network   │
            │  Network   │   │            │   │            │   │            │
            └────────────┘   └────────────┘   └────────────┘   └────────────┘
                      │                │                │
                 Extracted         Bitstream       Reconstructed
                feature map                         feature map
```

FIG. 8

⬚ CTU     ☐ Tile     ☐ Slice

EP 4 672 748 A1

**FIG. 9**

Video → [VCM encoder] → Bitstream → [VCM decoder] → Reconstructed Video → Machine Analysis / Human Consumption

**FIG. 10**

EP 4 672 748 A1

```
Video      ┌──────────┐      ┌─────────────────┐              ┌─────────────────┐   Reconstructed   ┌──────────┐
──────────▶│ Feature  │─────▶│  VCM            │  Bitstream   │  VCM            │     Feature       │ Machine  │
           │Extracting│      │  encoder        │─────────────▶│  decoder        │──────────────────▶│ Analysis │
           └──────────┘      │ ┌─────────────┐ │              │ ┌─────────────┐ │                   └──────────┘
                             │ │  Feature    │ │              │ │  Feature    │ │
                             │ │  Encoding   │ │              │ │  Decoding   │ │
                             │ └─────────────┘ │              │ └─────────────┘ │
                             └─────────────────┘              └─────────────────┘
```

FIG. 11

| | |
|---|---|
| FEATURE CODING LAYER | ~1130 |
| NEURAL NETWORK (FEATURE) ABSTRACTION LAYER | ~1120 |
| FEATURE EXTRACTION LAYER | ~1110 |

**FIG. 12**

| NNAL unit header | NNAL unit payload<br>(RBFP: Raw Byte Feature Payload) |
|---|---|

| Group<br>header | Group Data |
|---|---|

Coding indicator

| Feature<br>channel | | Feature<br>channel | Feature<br>channel | | Feature<br>channel |
|---|---|---|---|---|---|

| Feature<br>channel | | Feature<br>channel |
|---|---|---|

| TYPE | PREDICTION | side<br>information | Residual<br>Data |
|---|---|---|---|

EP 4 672 748 A1

**FIG. 13**

EP 4 672 748 A1

**FIG. 14**

(a)

(b)

47

**FIG. 15**

(a)          (b)          (c)          (d)

**FIG. 16**

**FIG. 17**

S1710 — PERCEPTUAL QO ADAPTATION START

S1720 — CALCULATE $a_L$

S1730 — machine_perceptual_QO_flag == true

NO → S1740 QP OPTIMIZATION

YES → S1750 — $a_L \rangle a_T$

NO → S1780 QP OPTIMIZATION

YES → S1770 — $a_L \rangle a_{HLT}$

YES → S1790 QP OPTIMIZATION

END

**FIG. 18**

S1810 — PERCEPTUAL QO ADAPTATION START

S1820 — CALCULATE $a_L$

S1830 — machine_perceptual_QO_flag == true

NO → S1840 QP OPTIMIZATION

YES → S1850 $a_L < a_T$

S1850 NO → S1860 $a_L > a_{HLT}$

S1850 YES → S1870 $a_L > a_{LLT}$

S1860 YES → S1880 QP OPTIMIZATION

S1870 YES → S1890 QP OPTIMIZATION

END

EP 4 672 748 A1

# FIG. 19

(a)

(b)

**FIG. 20**

```
        ( START )
            |
            v
                                        S2010
    +-----------------------------------+
    |  OBTAIN IMAGE PURPOSE INFORMATION |
    |          FOR IMAGE DATA           |
    +-----------------------------------+
            |
            v
                                        S2020
    +-----------------------------------+
    |      RECONSTRUCT IMAGE DATA       |
    |       THROUGH DEQUANTIZATION      |
    +-----------------------------------+
            |
            v
         ( END )
```

# FIG. 21

START

↓

PERFORM QUANTIZATION ON IMAGE DATA
BASED ON IMAGE PURPOSE

S2110

↓

ENCODE IMAGE PURPOSE INFORMATION
INDICATING IMAGE PURPOSE

S2120

↓

END

# FIG. 22

**FIG. 23**

## INTERNATIONAL SEARCH REPORT

| International application No. |
|---|
| **PCT/KR2024/002408** |

| **A.** | **CLASSIFICATION OF SUBJECT MATTER** |
|---|---|

**H04N 19/124**(2014.01)i; **H04N 19/184**(2014.01)i; **H04N 19/91**(2014.01)i; **H04N 19/18**(2014.01)i; **H04N 19/60**(2014.01)i

According to International Patent Classification (IPC) or to both national classification and IPC

| **B.** | **FIELDS SEARCHED** |
|---|---|

Minimum documentation searched (classification system followed by classification symbols)

H04N 19/124(2014.01); G06T 7/00(2006.01); H04N 19/11(2014.01); H04N 19/119(2014.01); H04N 19/154(2014.01); H04N 19/186(2014.01); H04N 19/98(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 작업(task), 인식(recognize), 주파수(frequency), 민감도(sensitivity), 레벨(level)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2022-0145405 A (LG ELECTRONICS INC.) 28 October 2022 (2022-10-28)<br>See paragraphs [0007]-[0008], [0050], [0063], [0075], [0102], [0109], [0163] and [0288]-[0289]; and claim 1. | 1,8,12-13 |
| Y | | 2-7,9-11 |
| Y | KR 10-2018-0070329 A (SAMSUNG ELECTRONICS CO., LTD.) 26 June 2018 (2018-06-26)<br>See paragraphs [0019]-[0020] and [0067]; and figure 19. | 2-7,9-11 |
| Y | FISCHER, Kristian et al. LEARNING FREQUENCY-SPECIFIC QUANTIZATION SCALING IN VVC FOR STANDARD-COMPLIANT TASK-DRIVEN IMAGE CODING. arXiv:2301.08533v1. pp. 1-5, January 2023.<br>See pages 1 and 4. | 2-7,9-11 |
| A | WO 2022-220723 A1 (TELEFONAKTIEBOLAGET LM ERICSSON (PUBL)) 20 October 2022 (2022-10-20)<br>See claims 1-20. | 1-13 |

| ✓ Further documents are listed in the continuation of Box C. | ✓ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 May 2024** | **27 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/002408** |

**C.     DOCUMENTS CONSIDERED TO BE RELEVANT**

| Category* | Citation of document, with indication, where appropriate, of the relevant passages | Relevant to claim No. |
|---|---|---|
| A | US 2022-0248065 A1 (COMCAST CABLE COMMUNICATIONS, LLC) 04 August 2022 (2022-08-04) See claims 1-8. | 1-13 |

Form PCT/ISA/210 (second sheet) (July 2022)

### INTERNATIONAL SEARCH REPORT
**Information on patent family members**

International application No.

**PCT/KR2024/002408**

| Patent document cited in search report | | | Publication date (day/month/year) | Patent family member(s) | | | Publication date (day/month/year) |
|---|---|---|---|---|---|---|---|
| KR | 10-2022-0145405 | A | 28 October 2022 | US | 2023-0082561 | A1 | 16 March 2023 |
| | | | | WO | 2021-177652 | A1 | 10 September 2021 |
| KR | 10-2018-0070329 | A | 26 June 2018 | KR | 10-2636100 | B1 | 13 February 2024 |
| | | | | US | 10440363 | B2 | 08 October 2019 |
| | | | | US | 2018-0176568 | A1 | 21 June 2018 |
| WO | 2022-220723 | A1 | 20 October 2022 | EP | 4324204 | A1 | 21 February 2024 |
| US | 2022-0248065 | A1 | 04 August 2022 | EP | 3541074 | A1 | 18 September 2019 |
| | | | | EP | 3541074 | B1 | 13 July 2022 |
| | | | | US | 11381849 | B2 | 05 July 2022 |
| | | | | US | 2019-0289335 | A1 | 19 September 2019 |
| | | | | US | 2022-0007062 | A1 | 06 January 2022 |

Form PCT/ISA/210 (patent family annex) (July 2022)